(19) **Europäisches Patentamt / European Patent Office / Office européen des brevets**

(11) **EP 4 772 909 A1**

(12) # EUROPEAN PATENT APPLICATION
published in accordance with Art. 153(4) EPC

(43) Date of publication:
08.07.2026 Bulletin 2026/28

(21) Application number: 25796641.6

(22) Date of filing: 01.10.2025

(51) International Patent Classification (IPC):
*G01S 15/46* (2006.01)　　*G01S 5/18* (2006.01)
*G01S 5/30* (2006.01)　　*G01S 15/08* (2006.01)
*B60R 21/015* (2006.01)

(52) Cooperative Patent Classification (CPC):
B60R 21/015; G01S 5/18; G01S 5/30; G01S 15/08;
G01S 15/46

(86) International application number:
PCT/KR2025/015696

(87) International publication number:
WO 2026/079832 (16.04.2026 Gazette 2026/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 07.10.2024 KR 20240136015
30.10.2024 KR 20240151504

(71) Applicant: Samsung Electronics Co., Ltd.
Suwon-si, Gyeonggi-do 16677 (KR)

(72) Inventors:
• KIM, Jinu
Suwon-si, Gyeonggi-do 16677 (KR)
• JU, Seungbum
Suwon-si, Gyeonggi-do 16677 (KR)
• JANG, Yongjoon
Suwon-si, Gyeonggi-do 16677 (KR)
• LIM, Jihyuk
Suwon-si, Gyeonggi-do 16677 (KR)
• LEE, Yuseon
Suwon-si, Gyeonggi-do 16677 (KR)
• PARK, Junhoo
Suwon-si, Gyeonggi-do 16677 (KR)
• KIM, Jaejoong
Suwon-si, Gyeonggi-do 16677 (KR)
• LEE, Woong
Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **ELECTRONIC DEVICE FOR RECOGNIZING OCCUPANT IN VEHICLE AND OPERATING METHOD THEREOF**

(57)　An electronic device and operation method for recognizing an occupant in a vehicle are provided. The electronic device may include a plurality of speakers that transmit an ultrasonic signal in an inaudible frequency band to the occupant in the vehicle, a microphone that receives the ultrasonic signal, memory storing one or more instructions and at least one processor including a processing circuit, and the one or more instructions, when executed by the at least one processor, may cause the electronic device to calculate a distance of a reflection path of a plurality of ultrasonic signals transmitted from each of the plurality of speakers, reflected from the occupant and received by the microphone, recognize an intersection of a plurality of parabolas obtained by connecting a plurality of points having the same distance of reflection paths inside the vehicle and identify a position of the occupant in the vehicle based on position information of the intersection.

EP 4 772 909 A1

FIG. 3

(A): CALCULATE DISTANCE OF
REFLECTION PATH OF ULTRASONIC
SIGNAL BASED ON TIME DIFFERENCE
BETWEEN SIGNAL TRANSMISSION TIMES

(B): RECOGNIZE PLURALITY
OF POINTS HAVING SAME
REFLECTION PATH DISTANCE
AS CALCULATED DISTANCE
OF REFLECTION PATH

(C): OBTAIN FIRST PARABOLA BY
CONNECTING PLURALITY OF POINTS

(D): RECOGNIZE INTERSECTION
BETWEEN FIRST PARABOLA AND
SECOND PARABOLA AND OBTAIN POSITION
INFORMATION OF INTERSECTION

## Description

## Technical Field

The disclosure relates to an electronic device and operation method for recognizing an occupant in a vehicle. More particularly, the disclosure relates to an electronic device and operation method for recognizing the presence or position of an occupant in a vehicle by transmitting and receiving an ultrasonic signal in an inaudible frequency band through a speaker and a microphone included in an audio system installed in the vehicle.

## Background Art

There is growing demand for recognizing whether an occupant, such as a driver, a front-seat occupant, or a rear-seat occupant, is present inside the vehicle or absent. In particular, legislation is currently underway to require vehicles to be equipped with occupant recognition systems in order to prevent occupants from being left unattended inside the vehicle after the driver gets out. Existing occupant monitoring systems (OMS) have recognized the drivers' faces from images obtained by capturing the drivers or occupants with cameras to perform actions such as drowsy driving warnings and driver status warnings or use the images for intelligent speed assistance devices, reverse assistance devices, event data recorders (EDR), or emergency braking devices. However, because the occupant monitoring systems (OMS) use cameras to capture the drivers' or occupants' faces and obtain images, there have been privacy violation issues due to the possibility of personal information leakage.

To prevent the possibility of personal information leakage and privacy invasion issues, an occupant recognition device that recognizes occupants in a vehicle without using a camera is needed. Additionally, technologies for addressing the cost, space, and design constraints associated with adding devices for occupant recognition are required.

## Disclosure of Invention

## Technical Solution

The present invention is set out in the appended set of claims.

An aspect of the disclosure provides an electronic device mounted in a vehicle. An electronic device according to an embodiment of the disclosure may include a plurality of speakers configured to transmit an ultrasonic signal in an inaudible frequency band to an occupant in the vehicle, a microphone configured to receive the ultrasonic signal, at least one processor including a processing circuitry, and memory storing one or more instructions. The one or more instructions, when executed by the at least one processor individually or collectively, may cause the electronic device to measure a time difference between a signal transmission time of a shortest path between a first speaker among the plurality of speakers and the microphone and a signal transmission time taken for a first ultrasonic signal transmitted from the first speaker to be reflected from the occupant and then received by the microphone. The one or more instructions, when executed by the at least one processor individually or collectively, may cause the electronic device to calculate a distance of a reflection path of the first ultrasonic signal based on the time difference. The one or more instructions, when executed by the at least one processor individually or collectively, may cause the electronic device to recognize a plurality of points having the same reflection path distance as the calculated distance of the reflection path in a cabin of the vehicle and obtain position information of an intersection between a first parabola connecting the plurality of points and a second parabola obtained based on a reflection path of a second ultrasonic signal output from a second speaker among the plurality of speakers. The one or more instructions, when executed by the at least one processor individually or collectively, may cause the electronic device to identify a position of the occupant based on the position information of the intersection.

Another aspect of the disclosure provides a method, performed by an electronic device mounted in a vehicle, of recognizing an occupant. In an embodiment of the disclosure, an operation method of the electronic device may include transmitting an ultrasonic signal in an inaudible frequency band to an occupant in the vehicle through each of a plurality of speakers and receiving the ultrasonic signal reflected from the occupant through a microphone. The operation method of the electronic device may include calculating a distance of a reflection path of a first ultrasonic signal transmitted from a first speaker among the plurality of speakers, based on a time difference between a signal transmission time of a shortest path between the first speaker and the microphone and a transmission time taken for the first ultrasonic signal to be reflected from the occupant and then received through the microphone. The operation method of the electronic device may include recognizing a plurality of points having the same reflection path distance as the calculated distance of the reflection path in the cabin of the vehicle. The operation method of the electronic device may include obtaining position information of an intersection between a first parabola connecting the plurality of points and a second parabola obtained based on a reflection path of a second ultrasonic signal output from a second speaker among the plurality of speakers. The operation method of the electronic device may include identifying a position of the occupant based on the position information of the intersection.

Another aspect of the disclosure provides a computer program product including a computer-readable storage medium. The storage medium may include instructions readable by an electronic device mounted in a vehicle to cause the electronic device to transmit an ultrasonic signal in an inaudible frequency band to an occupant in the vehicle through each of a plurality of speakers, receive the ultrasonic signal reflected from the occupant through a microphone, calculate a distance of a reflection path of a first ultrasonic signal transmitted from a first speaker among the plurality of speakers, based on a time difference between a signal transmission time of a shortest path between the first speaker and the microphone and a transmission time taken for the first ultrasonic signal to be reflected from the occupant and then received through the microphone, recognize a plurality of points having the same reflection path distance as the calculated distance of the reflection path in a cabin of the vehicle, obtain position information of an intersection between a first parabola connecting the plurality of points and a second parabola obtained based on a reflection path of a second ultrasonic signal output from a second speaker among the plurality of speakers, and identify a position of the occupant based on the position information of the intersection.

## Description of Drawings

The disclosure may be easily understood by combining the following detailed description with the accompanying drawings, and reference numerals represent structural elements.

FIG. 1 is a conceptual view for describing components of an electronic device mounted in a vehicle and an operation of recognizing an occupant by the components.

FIG. 2 is a flowchart illustrating a method of recognizing an occupant in a vehicle, performed by an electronic device, according to an embodiment of the disclosure.

FIG. 3 is a view for describing an operation of recognizing an occupant in a vehicle, performed by an electronic device, according to an embodiment of the disclosure.

FIG. 4 is a block diagram illustrating components of an electronic device according to an embodiment of the disclosure.

FIG. 5 is a flowchart illustrating a method, performed by an electronic device, according to an embodiment of the disclosure, of identifying a position of an occupant based on reflection paths of ultrasonic signals transmitted from three or more speakers.

FIG. 6 is a view for describing an operation, performed by an electronic device, according to an embodiment of the disclosure, of identifying a position of an occupant based on reflection paths of ultrasonic signals transmitted from three or more speakers.

FIG. 7 is a flowchart illustrating a method, performed by an electronic device, according to an embodiment of the disclosure, of improving accuracy of occupant recognition by identifying noise generated while a vehicle travels.

FIG. 8 is a flowchart illustrating a method, performed by an electronic device, according to an embodiment of the disclosure, of transmitting and receiving a plurality of ultrasonic signals through time division.

FIG. 9 is a flowchart illustrating a method, performed by an electronic device, according to an embodiment of the disclosure, of transmitting and receiving a plurality of ultrasonic signals through multiple frequencies.

FIG. 10 is a flowchart illustrating a method, performed by an electronic device, according to an embodiment of the disclosure, of, when one ultrasonic signal is output from a plurality of speakers, setting a frequency of an ultrasonic signal for each of the plurality of speakers.

FIG. 11 is a view illustrating a connection relationship between amps and speakers in an electronic device according to an embodiment of the disclosure.

FIG. 12 is a graph illustrating frequency response characteristics for describing an operation, performed by an electronic device, according to an embodiment of the disclosure, of, in a case that one ultrasonic signal is output from a plurality of speakers, setting a frequency of an ultrasonic signal for each of the plurality of speakers.

FIG. 13 is a flowchart illustrating a method, performed by an electronic device, according to an embodiment of the disclosure, of performing an operation according to a situational mode.

FIG. 14 is a flowchart illustrating a method, performed by an electronic device, according to an embodiment of the disclosure, of displaying occupant position information based on whether the occupant is a driver.

FIG. 15A is a view illustrating an operation, performed by an electronic device, according to an embodiment of the disclosure, of displaying occupant position information through a display in a vehicle.

FIG. 15B is a view illustrating an operation, performed by an electronic device, according to an embodiment of the disclosure, of displaying occupant position information through a display of an external device.

FIG. 16 is a view for describing an operation performed by using an artificial intelligence technique in an electronic device, according to an embodiment of the disclosure.

FIG. 17 shows an embodiment in which an electronic device, according to an embodiment of the disclosure, interworks with a server.

FIG. 18 is a view for describing the embodiment of FIG. 17 in detail.

## Mode for the Invention

Although general terms being currently widely used were selected as terminology used in embodiments of the disclosure while considering the functions of the disclosure, they may vary according to intentions of one of ordinary skill in the art, judicial precedents, the advent of new technologies, and the like. Terms arbitrarily selected by the applicant may also be used in a specific case. In this case, their meanings will be described in detail in the detailed description of the disclosure. Hence, the terms used in the disclosure must be defined based on the meanings of the terms and the entire contents of the disclosure, not by simply stating the terms themselves.

The singular forms "a," "an," and "the" include plural referents unless the context clearly dictates otherwise. All technical or scientific terms used herein have the same meaning as commonly understood by one of ordinary skill in the technical art written in the present specification.

In the entire specification, it will be understood that when a certain part "includes" a certain component, the part does not exclude another component but can further include another component, unless the context clearly dictates otherwise. In addition, the terms "portion", "part", "module", etc. used in this specification refer to a unit for processing at least one function or operation, which is implemented as hardware, software, or a combination of hardware and software.

The expression "configured to" used in the disclosure may be replaced with, for example, "suitable for", " having the capacity to", "designed to", "adapted to", "made to", or "capable to", in some situations. The expression "configured to" may not mean only hardwarily "specifically designed to". Instead, in some situations, the expression "a system configured to" may mean that the system is "capable of" doing something in conjunction with other devices or components. For example, the phrase "a processor configured to perform A, B, and C" may mean a generic-purpose processor (for example, a central processing unit (CPU) or an application processor) capable of performing the corresponding operations by executing a dedicated processor (for example, am embedded processor) for performing the corresponding operations, or one or more software programs stored in memory.

Also, in the disclosure, it should be understood that when one component is "connected" or "coupled" to another component, the one component may be directly connected or coupled to the other component, but may alternatively be connected or coupled to the other component with an intervening component therebetween, unless specified otherwise.

In the disclosure, a 'vehicle' may be a transportation means that runs on road or a railroad. The vehicle may be a concept including an internal combustion engine vehicle equipped with an engine as a power source, a hybrid vehicle equipped with an engine and an electric motor as power sources, and an electric vehicle equipped with an electric motor as a power source. In an embodiment of the disclosure, the vehicle may include at least one of an automobile, a train, or a motorcycle.

In the disclosure, an 'electronic device' refers to an occupant recognition device, which is mounted in a vehicle and configured to recognize whether a driver, a front-seat occupant, and/or a rear-seat occupant is present inside the vehicle or absent without a camera and also recognize the occupant's actions, movements, or breathing. In an embodiment of the disclosure, the electronic device may output an ultrasonic signal in an inaudible frequency band through a speaker, receive the ultrasonic signal reflected from an occupant through a microphone, and recognize an occupant based on a time difference and frequency difference between the transmitted signal (the output ultrasonic signal) and the received signal. The electronic device may be implemented as, for example, a human presence detection (HPD) system.

In the disclosure, the 'inaudible frequency' means a frequency incapable of being heard by human ears. The inaudible frequency may refer to, for example, a frequency of 18 kHz or higher.

Hereinafter, embodiments of the disclosure will be described in detail with reference to the appended drawings in order for one of ordinary skill in the art to readily embody the disclosure. However, the disclosure may be implemented in various different forms and is not limited to embodiments described herein.

Hereinafter, embodiments of the disclosure will be described in detail with reference to the accompanying drawings.

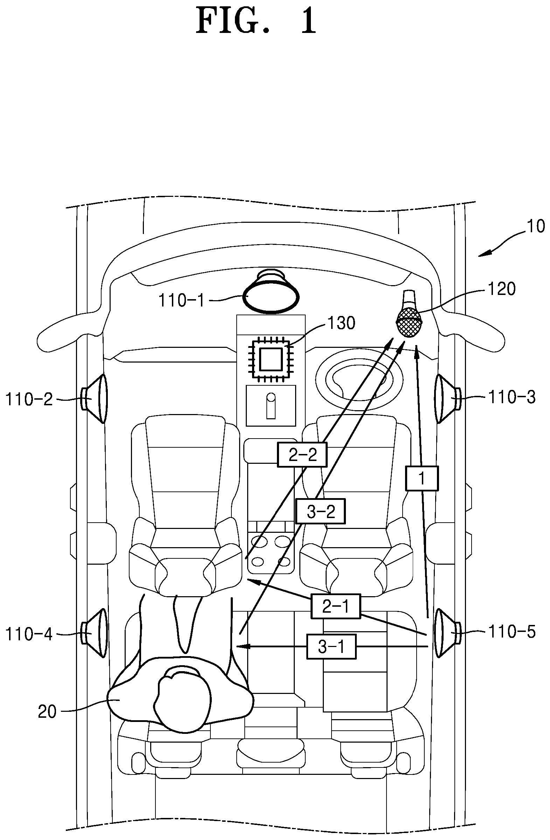

FIG. 1 is a conceptual view for describing components of an electronic device 100 mounted in a vehicle 10 and operations of the components.

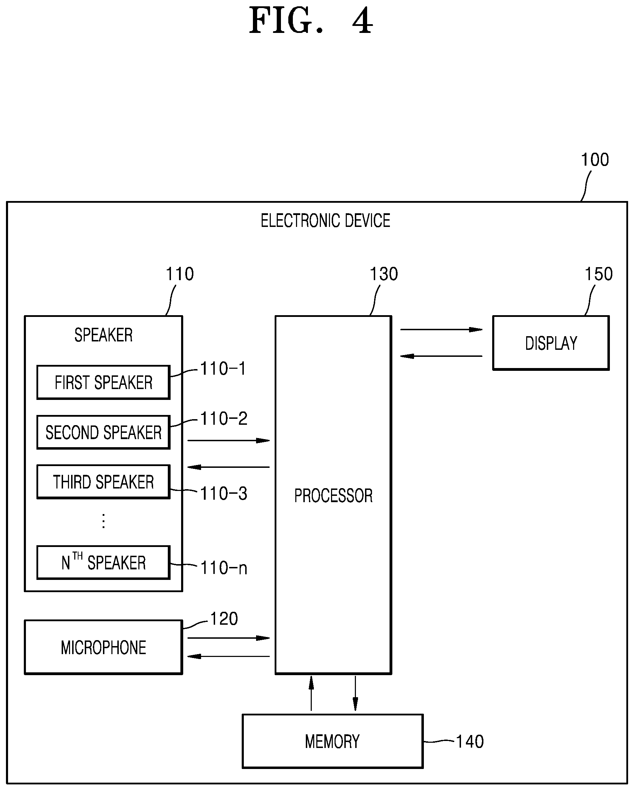

Referring to FIG. 1, the electronic device 100 may be implemented as an electronic device mounted in the vehicle 10 and including a plurality of speakers 110-1 to 110-5, a microphone 120, and a processor 130. The number and arrangement positions of the plurality of speakers 110-1 to 110-5 and a position of the microphone 120 as shown in FIG. 1 are examples for convenience of description, and the components of the electronic device 100 according to the disclosure are not limited to those shown in FIG. 1. The components of the electronic device 100 will be described in detail with reference to FIG. 4.

The electronic device 100 may be implemented as an occupant recognition system that recognizes whether an occupant 20 is present inside the vehicle 10 or absent. According to an embodiment of the disclosure, the electronic device 100 may recognize actions, movements, breathing, etc. of the occupant 20, as well as whether the occupant 20 is present inside the vehicle 10 or absent. The electronic device 100 may be implemented as, for example, a human presence detection (HPD) system.

According to an embodiment of the disclosure, the electronic device 100 may output ultrasonic signals in an inaudible frequency band using the plurality of speakers 110-1 to 110-5, receive the ultrasonic signals reflected from the occupant 20 through the microphone 120, and recognize the occupant 20 based on a time difference and a frequency difference between the transmitted signals (the output ultrasonic signals) and the received signals. Each of the plurality of speakers 110-1 to 110-5 may be located at different positions in the vehicle 10 and may include a high frequency speaker (for example, a tweeter), a middle frequency speaker (for example, a mid-range), and a low frequency speaker (for example, a woofer) depending on output volume bands. The microphone 120 may receive an ultrasonic signal, which is output from each of the plurality of speakers 110-1 to 110-5 and then reflected from the occupant 20, and provide information on a reception time and frequency of the ultrasonic signal to the processor 130.

In an example of a fifth speaker 110-5 among the plurality of speakers 110-1 to 110-5, an ultrasonic signal output from the fifth speaker 110-5 may be received directly by the microphone 120 (path 1 of FIG. 1), may arrive at an object in the vehicle 10, be reflected from the object and then arrive at the microphone 120 (paths 2-1 and 2-2 in FIG. 1), or may arrive at the occupant 20, be reflected from the occupant 20 and then arrive at the microphone 120 (paths 3-1 and 3-2 in FIG. 1). The processor 130 may measure a time difference and a frequency difference between an ultrasonic signal output from each of the plurality of speakers 110-1 to 110-5 and the ultrasonic signal received by the microphone 120 and recognize the occupant 20 based on the measured results. In an embodiment of the disclosure, the processor 130 may measure a time difference between a transmitted signal and a received signal, i.e., a transmission time, based on a time of flight of an ultrasonic signal. Also, the processor 130 may measure a time difference between a transmitted signal and a received signal based on a Doppler effect of an ultrasonic signal.

According to various embodiments, the ultrasonic signals reflected from the occupant 20 can be identified based on at least one of e.g., the Doppler effect of those signals (which can characterize the existence of a human), or an angle of arrival of a reflected ultrasonic signal received at the microphone being focused on the occupant zone, or the pre-measured frequency response of each obstacle (e.g., static objects such as seat, windshield, door, etc.) in the vehicle in which there is no occupant and the ultrasonic signal only reflects from the obstacle. However, the present application is not limited to the specific approach to detecting the signal reflected from particularly a human from among various reflected signals in the vehicle.

The electronic device 100 may display occupant recognition information including at least one of a position, an action, a movement, or breathing of the occupant 20. In an embodiment of the disclosure, when a driver seat in a vehicle is occupied (for example, when an occupant is a driver) and the vehicle travels, the electronic device 100 may display occupant recognition information through a display (for example, a center information display (CID) or an instrument cluster display) in the vehicle. In an embodiment of the disclosure, when a driver leaves a vehicle by getting out of the vehicle or when the vehicle is not in operation (for example, when the vehicle is parked), the electronic device 100 may transmit occupant recognition information to an external device (for example, a mobile device such as a smart phone or a tablet PC). In this case, the occupant recognition information may be displayed through a display of the external device.

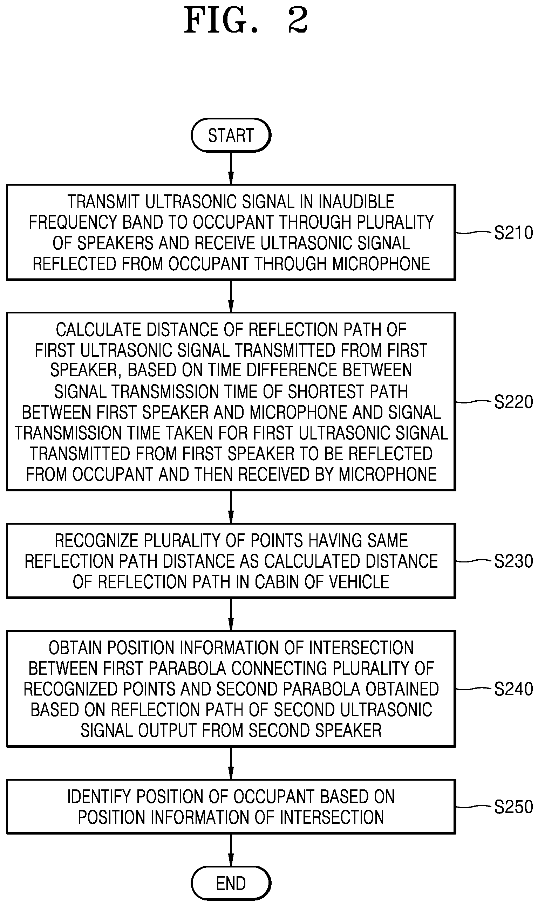

FIG. 2 is a flowchart illustrating a method of recognizing an occupant in a vehicle, performed by the electronic device 100, according to an embodiment of the disclosure.

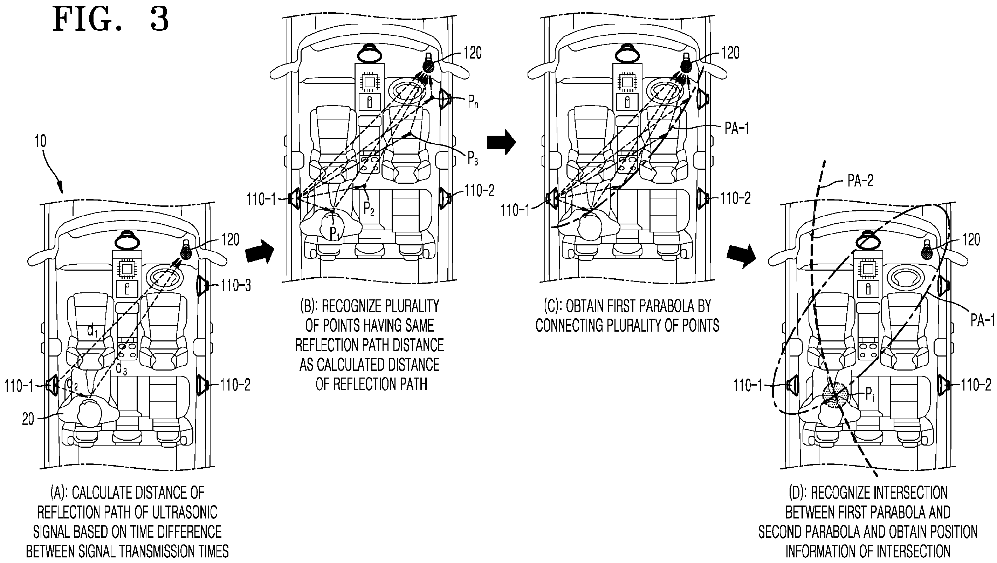

FIG. 3 is a view for describing an operation of recognizing an occupant in the vehicle 10, performed by the electronic device 100, according to an embodiment of the disclosure.

Hereinafter, a function and/or operation of recognizing an occupant in a vehicle and identifying the occupant's position, performed by the electronic device 100, will be described in detail with reference to FIGS. 2 and 3.

In operation S210, the electronic device 100 may transmit an ultrasonic signal in an inaudible frequency band to an occupant through a plurality of speakers, and receive an ultrasonic signal reflected from the occupant through a microphone. In an embodiment of the disclosure, the electronic device 100 may include the plurality of speakers which are two or more speakers and output an ultrasonic signal having an inaudible frequency band, for example, a frequency band of 18 kHz or higher through the plurality of speakers. The ultrasonic signal output through the plurality of speakers may arrive at the occupant inside the vehicle, be reflected from the occupant and then be received by the microphone. The ultrasonic signal reflected from the occupant may change in frequency compared to the ultrasonic signal output from each of the plurality of speakers due to the Doppler effect.

In operation S220, the electronic device 100 may calculate a distance of a reflection path of a first ultrasonic signal transmitted from a first speaker, based on a time difference between a signal transmission time of a shortest path between the first speaker and the microphone and a signal transmission time taken for the first ultrasonic signal transmitted from the first speaker to be reflected from the occupant and then received by the microphone. In an embodiment of the disclosure, the electronic device 100 may obtain an ultrasonic signal transmitted along the shortest path from the first speaker among the plurality of speakers toward the microphone. Also, the electronic device 100 may obtain a first ultrasonic signal transmitted from the first speaker, reflected from the occupant inside the vehicle and then arrived at the microphone along a reflection path. The electronic device 100 may measure a difference between transmission times of the two obtained ultrasonic signals, and calculate a distance of the reflection path based on the difference between the transmission times.

In the present disclosure, the term "distance" (e.g., used to describe a path and/or reflection path) may be interchangeably used with the term "length". In the present disclosure, a reflection path of an ultrasonic signal (e.g., emited from any of the speakers in the vehicle) may refer to a path in which the ultrasonic signal propagates via (i.e., is reflected at) an object or occupant towards the microphone in the vehicle. In the present disclosure, the length of the "shortest path" mentioned herein may be a predefined or predetermined parameter, e.g., known a-priori based on the specific spatial arrangement of the speaker(s) and microphone in the vehicle. The determination of the length of the shortest path is apparent to the skilled person in the art, and is not intended to limit the scope of the present application.

Referring to FIG. 3 together, the electronic device 100 may include a plurality of speakers 110-1, 110-2, 110-3 and a microphone 120. In an embodiment of the disclosure as shown in FIG. 3, positions of a first speaker 110-1, a second speaker 110-2, a third speaker 110-3, and the microphone 120 are examples, and components of the electronic device 100 according to the disclosure are not limited to those shown in FIG. 3. Referring to (a) in the embodiment shown in FIG. 3, the electronic device 100 may measure a first transmission time of an ultrasonic signal transmitted along a shortest path between the first speaker 110-1 among the plurality of speakers 110-1, 110-2, and 110-3 and the microphone 120. Also, the electronic device 100 may measure a second transmission time taken for a first ultrasonic signal transmitted from the first speaker 110-1 to arrive at an occupant 20, be reflected from the occupant 20 and then be received by the microphone 120.

The electronic device 100 may calculate a distance of a reflection path of an ultrasonic signal output from the first speaker 110-1 based on a time difference between the second transmission time and the first transmission signal. In an embodiment of the disclosure, the electronic device 100 may calculate the distance of the reflection path by using Equation 1 below.

$$[\text{Equation 1}]$$

$$(Td_2 + Td_3 - Td_1) \times \text{sound speed} = d_2 + d_3 - d_1$$

In Equation 1, $Td_1$ represents the first transmission time which is a signal transmission time of the shortest path between the first speaker 110-1 and the microphone 120, $Td_2$ represents a time taken for an ultrasonic signal output from the first speaker 110-1 to arrive at the occupant 20, and $Td_3$ represents a time taken for the ultrasonic signal to be reflected from the occupant 20 and then arrive at the microphone 120. The second transmission time may be calculated by a sum of $Td_2$ and $Td_3$. The electronic device 100 may measure a difference between the transmission time through the shortest path and the transmission time of the ultrasonic signal through the reflection path by subtracting $Td_1$ from the sum of $Td_2$ and $Td_3$ and multiply the difference between the transmission times by a speed of sound (for example, 340 m/s), thereby calculating a distance difference of the reflection path. The distance difference of the reflection path may be, for example, a value obtained by subtracting a distance $d_1$ of the shortest path between the first speaker 110-1 and the microphone 120 from a sum of a second distance $d_2$ between the first speaker 110-1 and the occupant 20 and a third distance $d_3$ between the occupant 20 and the microphone 120. For example, in the case in which $Td_1$ is 5.9 ms and a sum of $Td_2$ and $Td_3$ is 6.7 ms, a value obtained by subtracting the first distance $d_1$ from the sum of the second distance $d_2$ and the third distance $d_3$ may be 0.27 m.

However, the disclosure is not limited thereto, and the electronic device 100 may calculate the distance of the reflection path, that is, the sum of the second distance $d_2$ and the third distance $d_3$ by using $Td_2$ and $Td_3$.

Referring again to FIG. 2, the electronic device 100 may recognize a plurality of points having the same reflection path distance as the calculated distance of the reflection path in a cabin of the vehicle. Referring to Equation 1, the same time difference may be obtained at all positions having the same difference between the first distance $d_1$ and the sum of the second distance $d_2$ and the third distance $d_3$. In an embodiment of the disclosure, the electronic device 100 may recognize a plurality of positions having the same sum between the second distance $d_2$ and the third distance $d_3$ which is a distance of a reflection path in the cabin of the vehicle. Referring to (b) of FIG. 3 together, the electronic device 100 may recognize a plurality of points $P_1, P_2, P_3, ..., P_n$ representing a plurality of positions having the same sum of the second distance $d_2$ and the third distance $d_3$ in the cabin of the vehicle 10. In an embodiment of the disclosure, the plurality of points $P_1, P_2, P_3, ..., P_n$ may represent positions where probability that the occupant 20 is expected to be present is higher than or equal to a threshold value.

In operation S240 of FIG. 2, the electronic device 100 may obtain position information of an intersection between a first parabola connecting the plurality of recognized points and a second parabola obtained based on a reflection path of a second ultrasonic signal output from the second speaker. In an embodiment of the disclosure, the electronic device 100 may obtain the first parabola by connecting the plurality of points recognized in the cabin of the vehicle. Referring to (c) of FIG. 3 together, the electronic device 100 may obtain a first parabola PA-1 by connecting the plurality of points $P_1, P_2, P_3, ..., P_n$.

In an embodiment of the disclosure, the electronic device 100 may also perform operations S220 and S230 for the second speaker, thereby obtaining the second parabola according to the reflection path of the second ultrasonic signal output from the second speaker. Referring to (d) of FIG. 3 together, the electronic device 100 may measure a first transmission time of an ultrasonic signal transmitted along a shortest path between the second speaker 110-2 among the plurality of speakers 110-1, 110-2, and 110-3 and the microphone 120, measure a second transmission time taken for a second ultrasonic signal output from the second speaker 110-2 to arrive at the occupant 20, be reflected from the occupant 20 and then be received by the microphone 120, measure a time difference between the first transmission time and the second transmission time, and calculate a distance of a reflection path of the second ultrasonic signal by using Equation 1. The electronic device 100 may obtain a second parabola PA-2 by connecting a plurality of points having the same reflection path distance as the calculated distance of the reflection path in the cabin of the vehicle.

The electronic device 100 may recognize an intersection $P_i$ of the first parabola PA-1 and the second parabola PA-2 and obtain position information of the intersection $P_i$. In an embodiment of the disclosure, the electronic device 100 may obtain a three-dimensional position coordinate value of the intersection $P_i$.

In the present disclosure, identification of the plurality of points (e.g., those as described above) may be equivalent to the identification of a corresponding parabola. For example, the electronic device may be configured to identify a parabola including the plurality of points. Each of the plurality of points may be on a reflection path of an ultrasonic signal sent from a speaker. Such a reflection path may have a same length or distance as a reflection path via, or including an occupant (in other words, a path in which the ultrasonic signal reflects at the occupant), of the ultrasonic signal. The parabola(s) mentioned throughout the present disclosure (e.g., the first parabola PA-1 and the second parabola PA-2) may be considered to include such plurality of points as described above, and/or may be each specific to a speaker in the vehicle. For example, "reflection path(s) of the second ultrasonic signal" may be considered to include, by default, a reflection path via the occupant (e.g., from which both the first and second ultrasonic signal reflect) and/or one or more other reflection paths of the second ultrasonic signal having the same length as the reflection path via the occupant. The same principle may apply to the third ultrasonic signal, and so forth.

Referring again to FIG. 2, in operation S250, the electronic device 100 may identify a position of the occupant based on the position information of the intersection. Referring to (d) of FIG. 3 together, the electronic device 100 may identify that the occupant 20 is in a rear seat based on the position information of the intersection $P_i$.

There is a growing demand for recognizing whether the occupant 20, such as a driver, a front-seat occupant, or a rear-seat occupant, is present inside the vehicle 10 or absent. Particularly, legislation is currently underway to require vehicles to be equipped with occupant recognition systems in order to prevent occupants from being left unattended in the vehicles after the drivers get out. Existing occupant monitoring systems (OMS) have recognized drivers or occupants from images obtained by capturing the drivers or occupants with cameras. Therefore, there have been privacy violation issues due to the possibility of personal information leakage. To prevent the possibility of personal information leakage and privacy invasion issues, it is required to recognize the occupant 20 in the vehicle 10 without using a camera.

The disclosure may be aimed at providing the electronic device 100 that recognizes the occupant 20 in the vehicle 10 by transmitting and receiving an ultrasonic signal in an inaudible frequency band by using the plurality of speakers 110-1, 110-2, and 110-3 and the microphone 120 included in an audio system inside the vehicle 10. More specifically, the disclosure may be aimed at providing the electronic device 100 for recognizing a position of the occupant 20 based on distances of reflection paths of a plurality of ultrasonic signals output from each of the plurality of speakers 110-1, 110-2, and 110-3 to improve recognition accuracy of the occupant 20 inside the vehicle 10, and a method of operating the electronic device 100.

The electronic device 100 according to an embodiment of the disclosure shown in FIGS. 2 and 3 may obtain a first parabola PA-1 based on a length of a reflection path of a first ultrasonic signal transmitted/received from the first speaker 110-1 among the plurality of speakers 110-1, 110-2, and 110-3, obtain a second parabola PA-2 based on a length of a reflection path of a second ultrasonic signal transmitted/received from the second speaker 110-2, and identify a position of the occupant 20 in the vehicle 10 based on position information of an intersection of the first parabola PA-1 and the second parabola PA-2. The electronic device 100 according to an embodiment of the disclosure may provide a technical effect of improving recognition accuracy of the occupant 20 by identifying a position of the occupant 20 based on an intersection of a plurality of points having the same distance of reflection paths of a plurality of ultrasonic signals output from each of the plurality of speakers 110-1, 110-2, and 110-3. In addition, because the electronic device 100 according to an embodiment of the disclosure does not include a camera, there may be no possibility that personal information such as a driver's or occupant's face will leak, and because the speakers, the microphone, etc. included in the audio system inside the vehicle 10 are utilized, additional costs, space constraints, and design issues due to addition of electronic devices may be resolved.

FIG. 4 is a block diagram illustrating components of the electronic device 100 according to an embodiment of the disclosure.

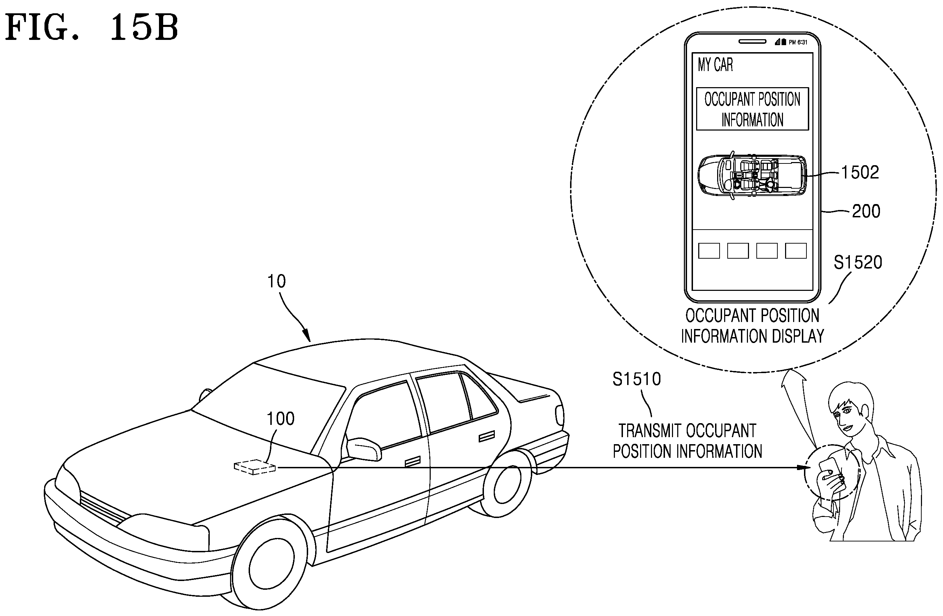

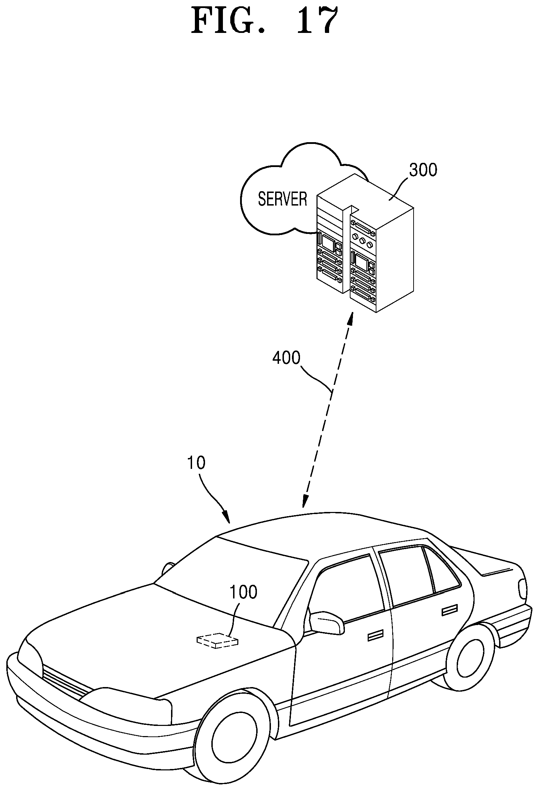

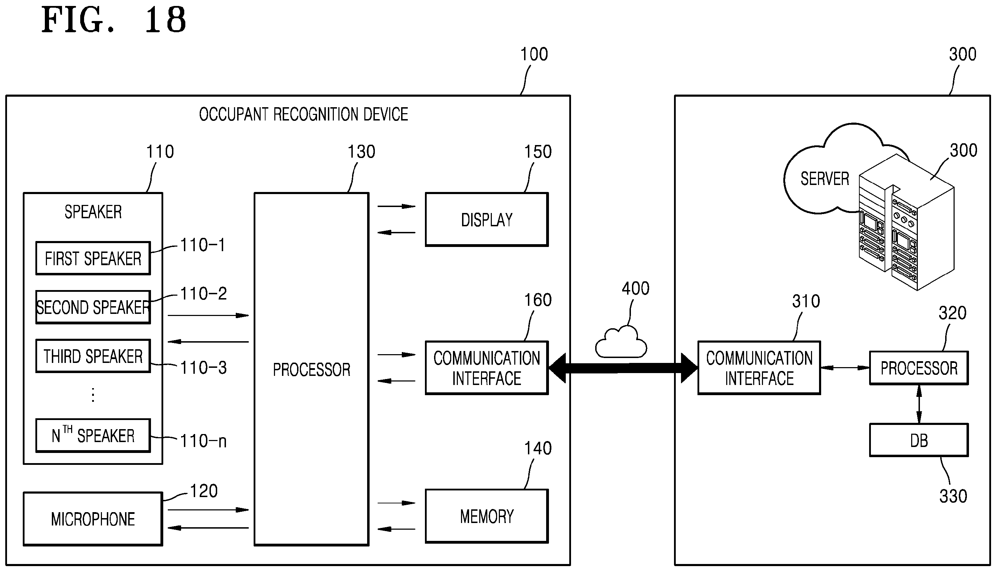

Referring to FIG. 4, the electronic device 100 may be implemented as an electronic device including a speaker 110, the microphone 120, the processor 130, memory 140, and a display 150. The speaker 110, the microphone 120, the processor 130, the memory 140, and the display 150 may be electrically and/or physically connected to each other. In FIG. 4, only essential components for describing operations of the electronic device 100 are shown, and components included in the electronic device 100 are not limited to those shown in FIG. 4. In an embodiment of the disclosure, the electronic device 100 may further include a communication interface 160 (see FIG. 18) configured to perform data transmission/-reception to/from a server 300 (see FIGS. 17 and 18) or an external device 200 (see FIG. 15B).

In an embodiment of the disclosure, the electronic device 100 may not include some of the components shown in FIG. 4. For example, the electronic device 100 may not include the display 150.

The speaker 110 may be configured to output a sound signal. In an embodiment of the disclosure, the speaker 110 may output an ultrasonic signal in an inaudible frequency band. The 'inaudible frequency' may refer to a frequency incapable of being heard by humans' ears, for example, a frequency of 18 kHz or higher.

The speaker 110 may be configured with a plurality of speakers including the first speaker 110-1, the second speaker 110-2, the third speaker 110-3, ..., a $n^{th}$ speaker 110-n. The plurality of speakers 110-1 to 110-n may be located at different positions inside a vehicle. The plurality of speakers 110-1 to 110-n may have different bands of output volumes. The plurality of speakers 110-1 to 110-n may be classified into a high frequency speaker (for example, a tweeter), a middle frequency speaker (for example, a mid-range), and a low frequency speaker (for example, a woofer) depending on the bands of output volumes.

The microphone 120 may be configured to receive a sound signal and convert the sound signal into an electrical signal. In an embodiment of the disclosure, the microphone 120 may receive an ultrasonic signal output from the plurality of speakers 110-1 to 110-n and reflected from an occupant in the vehicle. The microphone 120 may convert the received ultrasonic signal into an electrical signal and provide information on a signal level value of the converted electrical signal to the processor 130.

The processor 130 may execute one or more instructions stored in the memory 140. The processor 130 may be configured with a hardware element that performs arithmetic, logic, and input/output operations and image processing. In FIG. 4, the processor 130 is shown as being a single element. However, the processor 130 is not limited thereto. In an embodiment of the disclosure, the processor 130 may be configured with one or more elements.

The processor 130 may include a processing circuit. The processor 130 may include one or more processors. For example, the term "processor" used herein, as well as in claims, may include various processing circuitry including at least one processor. In the at least one processor, one or more processors may be configured to perform various functions and/or operations described herein individually and/or collectively in a distributed form. As used herein, the 'processor', the 'at least one processor', and the 'one or more processors' may be configured to perform various functions. However, the terms may cover, but is not limited to, a situation in which a processor performs some of functions and another processor(s) performs other ones of the functions, and a situation in which a single processor performs all functions. Also, the at least one processor may include a combination of processors that perform various functions of the disclosed functions in a distributed manner. The at least one processor may execute program codes or instructions for achieving or performing various functions.

The processor 130 may be implemented as, for example, a general-purpose processor, such as central processing unit (CPU), application processor (AP), and digital signal processor (DSP), a graphics-dedicated processor, such as graphics processing unit (GPU) and vision processing unit (VPU), or an AI-dedicated processor such as neural processing unit (NPU). The processor 130 may control processing of input data according to a pre-defined operation rule or an AI model. Also, in the case in which the processor 130 is an AI-dedicated processor, the AI-dedicated processor may be designed with a hardware structure specialized for processing a specific AI model.

The memory 140 may be configured as at least one storage medium among, for example, a flash memory type, a hard disk type, a multimedia card micro type, card type memory (for example, Secure Digital (SD) memory or eXtreme Digital (XD) memory), Random Access Memory (RAM), Static Random Access Memory (SRAM), Read-Only Memory (ROM), Electrically Erasable Programmable Read-Only Memory (EEPROM), Programmable Read-Only Memory (PROM), or an optical disk.

The memory 140 may store instructions that are executed by the processor 130 for the electronic device 100 to perform an operation of recognizing an occupant in a vehicle. In an embodiment of the disclosure, the instructions stored in the memory 140 may include at least one of, for example, an algorithm, a data structure, a program code, or an application program. The instructions stored in the memory 140 may be implemented in a programming or scripting language, such as, for example, C, C++, Java, assembler, etc.

The processor 130 may execute the instructions stored in the memory 140 to perform an operation of recognizing an occupant in the vehicle and identifying a position of the occupant. Hereinafter, functions and/or operations performed by the processor 130 that executes the instructions or program codes stored in the memory 140 will be described in detail.

The processor 130 may measure a time difference between a signal transmission time of a shortest path between the first speaker 110-1 among the plurality of speakers 110 and the microphone 120 and a signal transmission time taken for a first ultrasonic signal transmitted from the first speaker 110-1 to be reflected from an occupant in the vehicle and then received by the microphone 120. The processor 130 may perform an operation of multiplying the time difference between the signal transmission times by a speed of sound (for example, 340 m/s), thereby calculating a distance difference between the shortest path and a reflection path of the first ultrasonic signal. In an embodiment of the disclosure, the processor 130 may calculate a distance of the reflection path of the first ultrasonic signal through an operation of multiplying, by the speed of sound, a sum of a time taken for a first ultrasonic signal output from the first speaker 110-1 to arrive at the occupant and a time taken for the first ultrasonic signal reflected from the occupant to arrive at the microphone 120.

The processor 130 may recognize a plurality of points having the same reflection path distance as the calculated distance of the reflection path in the cabin of the vehicle and obtain a first parabola by connecting the plurality of points. In an embodiment of the disclosure, the plurality of points may represent positions at which probability that an occupant is expected to be present in the cabin of the vehicle is greater than or equal to a preset threshold value.

The processor 130 may obtain a second parabola by performing the same operation for the second speaker 110-2 among the plurality speakers 110 as for the first speaker 110-1. The processor 130 may measure a first transmission time of an ultrasonic signal transmitted along a shortest path between the second speaker 110-2 and the microphone 120, measure a second transmission time which is a time taken for a second ultrasonic signal output from the second speaker 110-2 to arrive at an occupant, be reflected from the occupant and then be received by the microphone 120, measure a time difference between the first transmission time and the second transmission time, and calculate a distance of a reflection path of the second ultrasonic signal based on the time difference between the transmission times. The processor 130 may obtain a second parabola by connecting a plurality of points having the same reflection path distance as the calculated distance of the reflection path of the second ultrasonic signal in the cabin of the vehicle.

The processor 130 may recognize an intersection of the first parabola and the second parabola and obtain position information on the intersection. In an embodiment of the disclosure, the processor 130 may obtain a three-dimensional position coordinate value of the intersection.

The processor 130 may identify a position of the occupant based on the position information on the intersection.

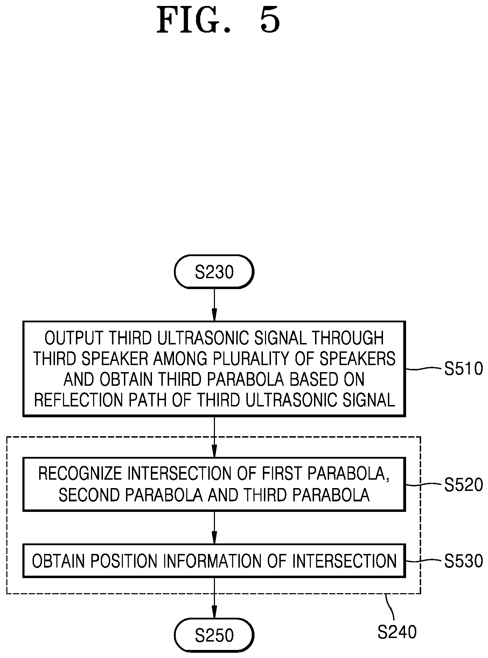

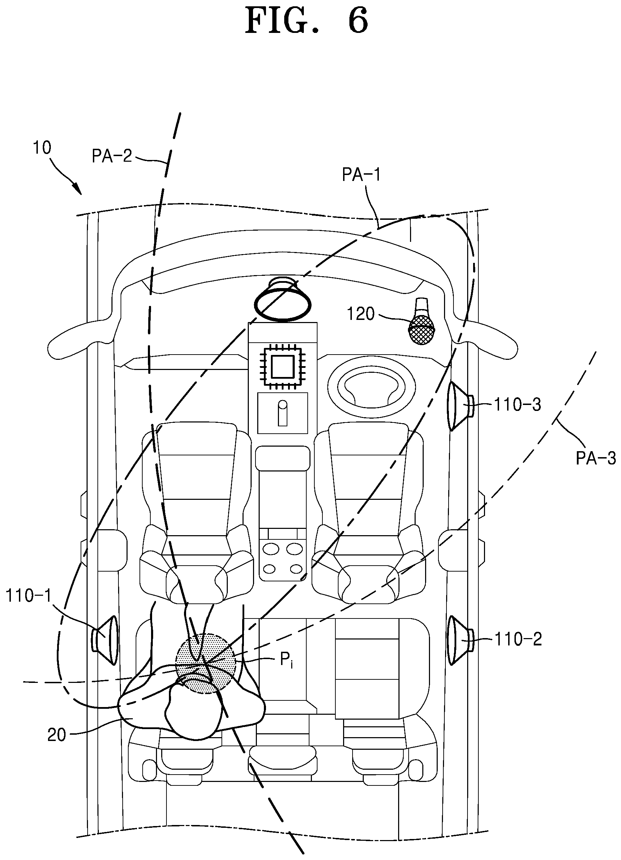

An operation performed by the processor 130 to obtain the first parabola and the second parabola based on the distances of the reflection paths of the first ultrasonic signal and the second ultrasonic signal output from the first speaker 110-1 and the second speaker 110-2 and identify a position of an occupant in the cabin of the vehicle based on position information on an intersection of the first parabola and the second parabola has been described. However, the disclosure is not limited thereto. In an embodiment of the disclosure, to recognize an exact position of an occupant, the processor 130 may obtain a plurality of parabolas based on distances of reflection paths of a plurality of ultrasonic signals output from three or more speakers in addition to the first speaker 110-1 and the second speaker 110-2 and identify a position of the occupant based on an intersection of the plurality of parabolas. Details about an embodiment performed by the processor 130 of identifying a position of an occupant based on a plurality of reflection paths of a plurality of ultrasonic signals output from three speakers will be described in detail with reference to FIGS. 5 and 6.

When a plurality of ultrasonic signals output from each of the plurality of speakers 110 are received by the microphone 120, the processor 130 may remove noise from the ultrasonic signals by using a reference signal for each of the plurality of speakers 110 to reduce an error. In an embodiment of the disclosure, the processor 130 may obtain a reference signal for each of the plurality of speakers 110 in advance, wherein the reference signal is not modulated by an occupant, etc. The 'reference signal' may be a signal including intrinsic noise or distortion depending on intrinsic characteristics and a position of a speaker. The reference signal may be obtained for each of the plurality of speakers 110. The processor 130 may measure a comparison value by performing a negative sum operation on an ultrasonic signal output from each of the plurality of speakers 110 and received by the microphone 120 and a previously obtained reference signal. The processor 130 may measure a comparison value by obtaining a negative sum of a first ultrasonic signal output from the first speaker 110-1, reflected from an occupant and then received by the microphone 120 and a previously obtained first reference signal for the first speaker 110-1, and use the measured comparison value as a signal for recognizing the occupant. The processor 130 may obtain a negative sum of a second ultrasonic signal output from the second speaker 110-2 and then received and a previously obtained second reference signal for the second speaker 110-2 and obtain a negative sum of a third ultrasonic signal output from the third speaker 110-3 and then received and a previously obtained third reference signal for the third speaker 110-3. The processor 130 may improve accuracy of comparison between modulation caused by intrinsic characteristics or a position of each speaker and modulation caused by reflection and prevent distortion of ultrasonic signals through negative sums using reference signals, thereby reducing an error in measuring a position of an occupant.

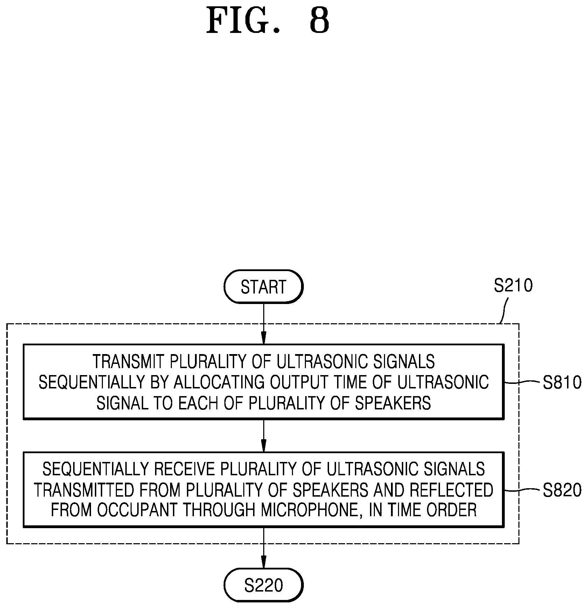

In an embodiment of the disclosure, the processor 130 may control the plurality of speakers 110 to output a plurality of ultrasonic signals by using a time division method of allocating an output time of an ultrasonic signal to each of the plurality of speakers 110. Details about an embodiment in which the processor 130 outputs and receives ultrasonic signals based on the time division method will be described in detail with reference to FIG. 8.

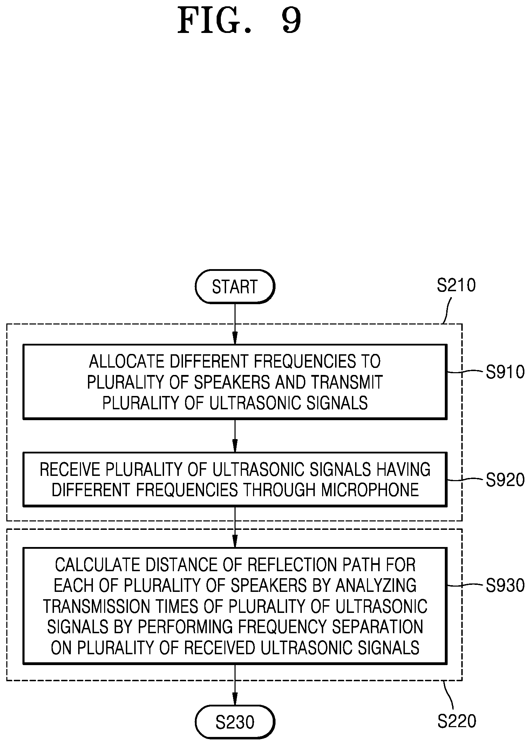

In an embodiment of the disclosure, the processor 130 may allocate different frequencies to the plurality of speakers 110 and control the plurality of speakers 110 to output a plurality of ultrasonic signals having the different frequencies. Details about an embodiment in which the processor 130 outputs a plurality of ultrasonic signals by using multiple frequencies and receives a plurality of ultrasonic signals having different frequencies through the microphone 120 will be described in detail with reference to FIG. 9.

The display 150 may display occupant position information under control by the processor 130. In an embodiment of the disclosure, the display 150 may display occupant recognition information, such as actions, movements, or breathing of the occupant, in addition to position of the occupant. In an embodiment of the disclosure, the display 150 may display information about an intruder from outside the vehicle or an infant left unattended inside the vehicle.

In an embodiment of the disclosure, the display 150 may be implemented as a CID positioned inside the vehicle, although not limited thereto. However, the display 150 may be configured as at least one of, for example, an instrument cluster display, a head up display (HUD), a navigation system, or a front-seat display.

The display 150 may include a screen configured as at least one of, for example, a liquid crystal display, a thin film transistor-liquid crystal display, an organic light-emitting diode display, a flexible display, a three-dimensional (3D) display, or an electrophoretic display.

a flowchart illustrating a method, performed by the electronic device 100 according to an embodiment of the disclosure, of identifying a position of an occupant based on reflection paths of ultrasonic signals transmitted from three or more speakers.

FIG. 6 is a view for describing an operation, performed by the electronic device 100 according to an embodiment of the disclosure, of identifying a position of an occupant based on reflection paths of ultrasonic signals transmitted from three or more speakers 110-1, 110-2, and 110-3.

Operation S510 shown in FIG. 5 may be performed after operation S230 of FIG. 2 is performed. Operations S520 and S530 shown in FIG. 5 may specify operation S240 shown in FIG. 2. After operation S530 shown in FIG. 5 is performed, operation S250 of FIG. 2 may be performed.

Hereinafter, a function and/or operation, performed by the electronic device 100, of identifying a position of an occupant based on reflection paths of ultrasonic signals transmitted from the plurality of speakers 110-1, 110-2, and 110-3 will be described with reference to FIGS. 5 and 6.

In operation S510 of FIG. 5, the electronic device 100 may output a third ultrasonic signal through a third speaker among the plurality of speakers and obtain a third parabola based on a reflection path of the third ultrasonic signal. Referring to an embodiment shown in FIG. 6 together, the processor 130 (see FIG. 4) of the electronic device 100 may control the third speaker 110-3 among the plurality of speakers 110-1, 110-2, and 110-3 to output the third ultrasonic signal. The processor 130 may measure a first transmission time of an ultrasonic signal output along a shortest path between the third speaker 110-3 and the microphone 120, measure a second transmission time which is a time taken for a third ultrasonic signal output from the third speaker 110-3 to arrive at the occupant 20, be reflected from the occupant 20 and then be received by the microphone 120, measure a time difference between the first transmission time and the second transmission time, and calculate a distance of a reflection path of the third ultrasonic signal based on the time difference between the transmission times. The processor 130 may obtain a third parabola PA-3 by connecting a plurality of points having the same reflection path distance as the calculated distance of the reflection path of the third ultrasonic signal in the cabin of the vehicle.

Referring again to FIG. 5, in operation S520, the electronic device 100 may recognize an intersection of the first parabola, the second parabola, and the third parabola. Referring to FIG. 6 together, the processor 130 may recognize an intersection $P_i$ of the first parabola PA-1, the second parabola PA-2, and the third parabola PA-3.

In operation S530 of FIG. 5, the electronic device 100 may obtain position information of the intersection. Referring to FIG. 6 together, the processor 130 may obtain a three-dimensional position coordinate value of the intersection $P_i$.

In operation S250, the electronic device 100 may identify a position of the occupant based on the position information of the intersection.

The electronic device 100 according to the embodiment of the disclosure shown in FIGS. 5 and 6 may obtain a plurality of parabolas PA-1, PA-2, and PA-3 based on lengths of reflection paths of a plurality of ultrasonic signals output from three speakers 110-1, 110-2, and 110-3, and identify a position of the occupant 20 inside the vehicle based on an intersection of the plurality of parabolas PA-1, PA-2, and PA-3, thereby improving accuracy of position recognition of the occupant 20. FIGS. 5 and 6 show an embodiment using three speakers 110-1, 110-2, and 110-3. However, the disclosure is not limited to the embodiment shown in FIGS. 5 and 6. In an embodiment of the disclosure, the electronic device 100 may identify a position of the occupant 20 based on reflection paths of a plurality of ultrasonic signals output from three or more speakers.

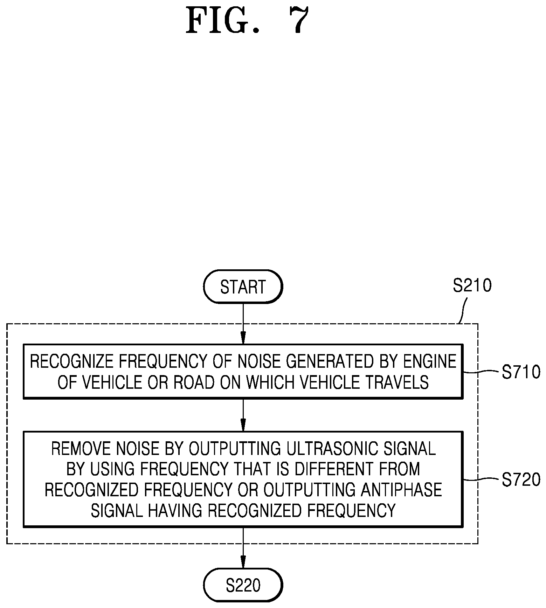

FIG. 7 is a flowchart illustrating a method, performed by the electronic device 100 according to an embodiment of the disclosure, of improving accuracy of occupant recognition by identifying noise generated while a vehicle travels.

Operations S710 and S720 shown in FIG. 7 may specify operations included in operation S210 of FIG. 2. After operation S720 shown in FIG. 7 is performed, operation S220 of FIG. 2 may be performed.

In operation S710, the electronic device 100 may recognize a frequency of noise generated by an engine of the vehicle or a road on which the vehicle travels. A frequency of noise generated by the engine of the vehicle or a road on which the vehicle travels may be a frequency of a higher frequency band than a frequency band (for example, a frequency band from 18 kHz to less than 28 kHz) of an inaudible ultrasonic signal output from a speaker of a vehicle. In an embodiment of the disclosure, the processor 130 (see FIG. 4) of the electronic device 100 may recognize a frequency band of noise generated by the electronic device 100, in addition to the frequency of the noise generated by the engine of the vehicle or the road.

In operation S720, the electronic device 100 may remove the noise by outputting an ultrasonic signal having a frequency that is different from the recognized frequency or outputting an antiphase signal having the recognized frequency. In an embodiment of the disclosure, the processor 130 may control the speakers to output an ultrasonic signal by using a frequency that is different from the recognized frequency of the noise. Therefore, the processor 130 may avoid noise caused by the engine of the vehicle or a road. In an embodiment of the disclosure, the processor 130 may cancel the noise generated by the engine of the vehicle or the road by outputting an antiphase signal having the same frequency as the recognized frequency.

The electronic device 100 according to the embodiment of the disclosure shown in FIG. 7 may detect noise generated while the vehicle travels and perform frequency avoidance or removal, thereby minimizing influence of noise applied to ultrasonic signals and improving accuracy of occupant position recognition based on reflection paths of the ultrasonic signals and recognition stability.

FIG. 8 is a flowchart illustrating a method, performed by the electronic device 100 according to an embodiment of the disclosure, of transmitting and receiving a plurality of ultrasonic signals through time division.

Operations S810 and S820 shown in FIG. 8 may specify operations included in operation S210 of FIG. 2. After operation S820 shown in FIG. 8 is performed, operation S220 of FIG. 2 may be performed.

In operation S810, the electronic device 100 may transmit a plurality of ultrasonic signals sequentially by allocating an output time of an ultrasonic signal to each of the plurality of speakers. In an embodiment of the disclosure, the processor 130 (see FIG. 4) of the electronic device 100 may allocate an output time of an ultrasonic signal to each of the plurality of speakers. The processor 130 may control the plurality of speakers to sequentially transmit a plurality of ultrasonic signals based on the allocated output times.

In operation S820, the electronic device 100 may sequentially receive the plurality of ultrasonic signals transmitted from the plurality of speakers and reflected from an occupant through the microphone, in time order. In an embodiment of the disclosure, the processor 130 may control the plurality of speakers such that, after an ultrasonic signal is transmitted from any of the plurality of speakers, reflected from an occupant and then received by the microphone, another ultrasonic signal is transmitted from another speaker. For example, after a first ultrasonic signal output from the first speaker is reflected from an occupant and then received by the microphone, a second ultrasonic signal may be output from the second speaker. Likewise, after the second ultrasonic signal output from the second speaker is reflected from the occupant and then received by the microphone, a third ultrasonic signal may be output from the third speaker.

By using the time division method shown in FIG. 8, the electronic device 100 according to an embodiment of the disclosure may omit unnecessary computational processing such as frequency separation on a plurality of ultrasonic signals reflected from the occupant and then received through the microphone, thereby simplifying system design. Also, the electronic device 100 according to an embodiment of the disclosure may provide a technical effect of reducing an amount of computation for processing and analyzing a plurality of ultrasonic signals and reducing power consumption by using the time division method.

FIG. 9 is a flowchart illustrating a method, performed by the electronic device 100 according to an embodiment of the disclosure, of transmitting and receiving a plurality of ultrasonic signals through multiple frequencies.

Operations S910 and S920 shown in FIG. 9 may specify operations included in operation S210 of FIG. 2. Operation S930 shown in FIG. 9 may specify operations included in operation S220 of FIG. 2. After operation S930 shown in FIG. 9 is performed, operation S230 of FIG. 2 may be performed.

In operation S910, the electronic device 100 may allocate different frequencies to the plurality of speakers and transmit a plurality of ultrasonic signals. For example, the processor 130 (see FIG. 4) of the electronic device 100 may allocate a first frequency to the first speaker, a second frequency to the second speaker, and a third frequency to the third speaker and control the plurality of speakers to output ultrasonic signals having different frequencies. The plurality of speakers may output a plurality of ultrasonic signals having different frequencies at the same time.

In operation S920, the electronic device 100 may receive the plurality of ultrasonic signals having the different frequencies through the microphone.

In operation S930, the electronic device 100 may calculate a distance of a reflection path for each of the plurality of speakers by analyzing transmission times of the plurality of ultrasonic signals by performing frequency separation on the plurality of ultrasonic signals received through the microphone. In an embodiment of the disclosure, the processor 130 may analyze a transmission time for each of the plurality of ultrasonic signals by performing frequency separation on the plurality of received ultrasonic signals. The processor 130 may calculate, based on the transmission time for each of the plurality of ultrasonic signals, a distance of a reflection path of the ultrasonic signal according to a position of each of the plurality of speakers and a position of an occupant.

The time division method has an advantage of reducing an amount of computation for a plurality of ultrasonic signals but has a disadvantage of requiring a long time for transmitting and receiving ultrasonic signals because a plurality of ultrasonic signals need to be transmitted and received sequentially. The electronic device 100 according to an embodiment of the disclosure may provide a technical effect of shortening a time required for occupant recognition by shortening a time required for transmission and reception of a plurality of ultrasonic signals by using the multiple frequencies illustrated in FIG. 9. In addition, the electronic device 100 according to an embodiment of the disclosure may prevent distortion of a reflection path caused by a moving object (for example, a moving occupant) and reduce possibility of errors in recognizing an occupant's position by simultaneously transmitting and receiving a plurality of ultrasonic signals.

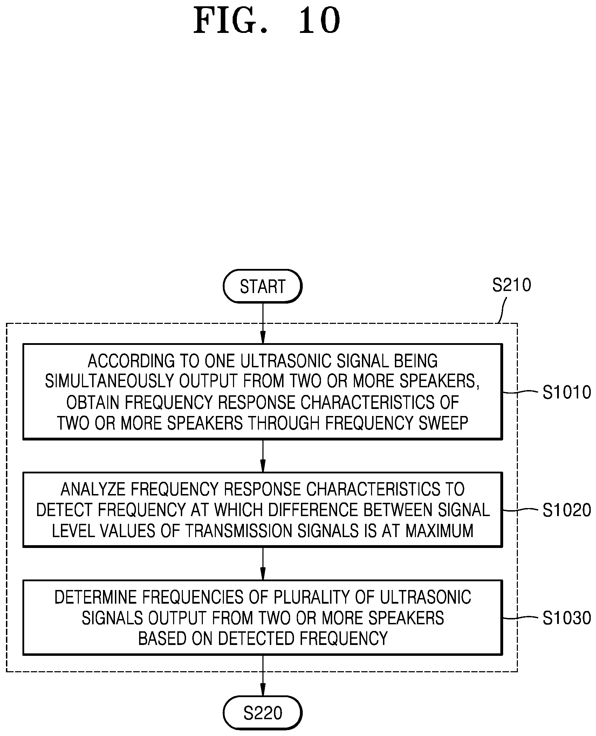

FIG. 10 is a flowchart illustrating a method, performed by the electronic device 100 according to an embodiment of the disclosure, of, in a case that one ultrasonic signal is output from a plurality of speakers, setting a frequency of an ultrasonic signal for each of the plurality of speakers.

Operations S1010 and S1020 shown in FIG. 10 may specify operations included in operation S210 of FIG. 2. After operation S1030 of FIG. 10 is performed, operation S220 of FIG. 2 may be performed.

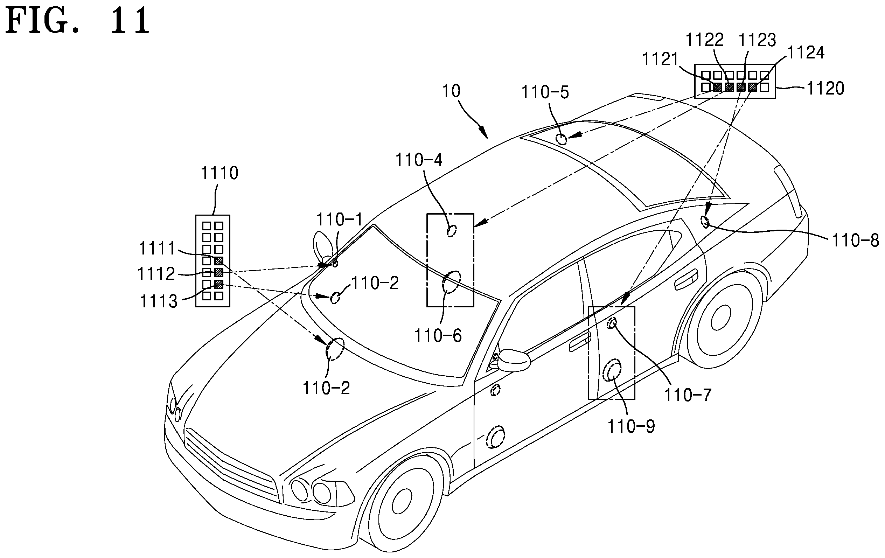

FIG. 11 is a view illustrating a connection relationship between amps 1110 and 1120 and speakers 110-1 to 110-9 in the electronic device 100 according to an embodiment of the disclosure.

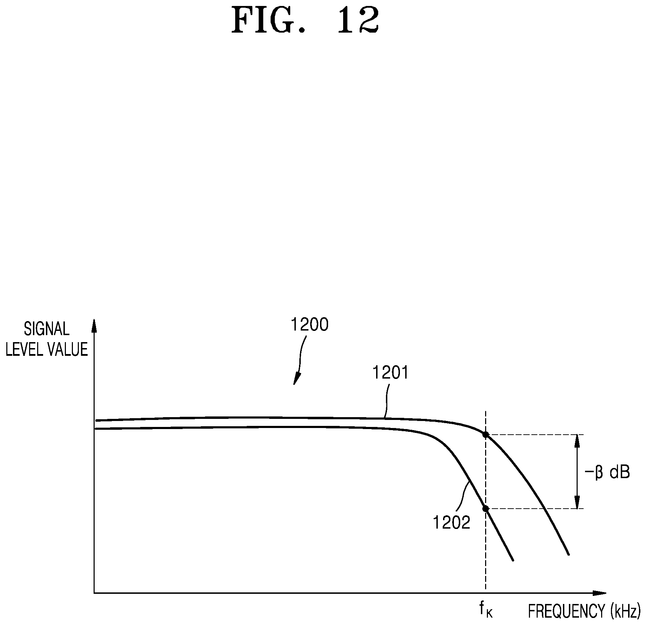

FIG. 12 is a graph illustrating frequency response characteristics 1200 for describing an operation, performed by the electronic device 100 according to an embodiment of the disclosure, of, in a case that one ultrasonic signal is output from a plurality of speakers, setting a frequency of an ultrasonic signal for each of the plurality of speakers.

Hereinafter, a function and/or operation, performed by the electronic device 100, of, in a case that one ultrasonic signal is output from a plurality of speakers, setting a frequency of an ultrasonic signal for each of the plurality of speakers will be described in detail with reference to FIGS. 11 and 12.

In operation S1010, according to one ultrasonic signal being simultaneously output from two or more speakers, the electronic device 100 may obtain frequency response characteristics of the two or more speakers through frequency sweep. The electronic device 100 may include a plurality of speakers, and the plurality of speakers may receive a signal in an inaudible frequency band from output terminals of amps and output an ultrasonic signal. Each of the plurality of speakers may be connected to an output terminal of an amp, although not limited thereto. One or more speakers may be connected to an output terminal of an amp, and the same signal may be output simultaneously by the output terminal through the plurality of speakers.

Referring to the embodiment of the disclosure shown in FIG. 11 together, the electronic device 100 may include the plurality of speakers 110-1 to 110-9 located at different positions inside the vehicle 10, and the plurality of amps 1110 and 1120 connected to the plurality speakers 110-1 to 110-9. Positions, shapes, and numbers of the plurality of speakers 110-1 to 110-9 and the plurality of amps 1110 and 1120 shown in FIG. 11 are examples for convenience of description, and an embodiment of the disclosure is not limited to those shown in the drawing. In FIG. 11, a first amp 1110 may be connected to the first, second and third speakers 110-1, 110-2, and 110-3. For example, the first speaker 110-1 may be connected to a second output terminal 1112 of the first amp 1110, the second speaker 110-2 may be connected to a first output terminal 1111, and the third speaker 110-3 may be connected to a third output terminal 1113 to receive ultrasonic signals in an inaudible frequency band from the first to third output terminals 1111 to 1113. The first to third speakers 110-1 to 110-3 may be connected one-to-one (1:1) to the first to third output terminals 1111, 1112 and 1113 of the first amp 1110, receive different ultrasonic signals, and output different ultrasonic signals. Fourth to ninth speakers 110-4 to 110-9 may be connected to the second amp 1120. For example, the fourth speaker 110-4 and the sixth speaker 110-6 may be connected to a second output terminal 1122 of the second amp 1120, and the fifth speaker 110-5 may be connected to a first output terminal 1121 to receive ultrasonic signals in an inaudible frequency band from the second and first output terminal 1122 and 1121.

In the embodiment shown in FIG. 11, the fourth speaker 110-4 and the sixth speaker 110-6 may be connected to an output terminal (for example, the second output terminal 1122) of the second amp 1120 to receive the same signal. In this case, the fourth speaker 110-4 and the sixth speaker 110-6 may output the same ultrasonic signal, and according to the same ultrasonic signal being received by the microphone, signal interference may occur. Particularly, in the case in which the fourth speaker 110-4 and the sixth speaker 110-6 are different types of speakers that output volumes in different bands, signal interference may occur in a specific frequency band. Likewise, in FIG. 11, the seventh speaker 110-7 and the ninth speaker 110-9 may also be connected to a fourth output terminal 1124 of the second amp 1120, and accordingly, the same signal may be simultaneously output from the two speakers.

In the case in which two or more speakers are connected to one output terminal of an amp and the same ultrasonic signal is output from the two or more speakers, for example, in the case of the fourth speaker 110-4 and the sixth speaker 110-6 of the embodiment of the disclosure shown in FIG. 11, the processor 130 (see FIG. 4) of the electronic device 100 may output an ultrasonic signal while changing a frequency through frequency sweep and obtain frequency response characteristics by receiving the output signal through the microphone. The frequency response characteristics 1200 shown in FIG. 12 are a graph showing two signal level values for ultrasonic signals output from two speakers, including a first signal level value 1201 and a second signal level value 1202 according to frequencies. For example, in the case in which the fourth speaker 110-4 is a high frequency speaker (for example, a tweeter) and the sixth speaker 110-6 is a low frequency speaker (for example, a woofer), the first signal level value 1201 in the frequency response characteristics 1200 may represent a signal level value obtained by receiving an ultrasonic signal output from the fourth speaker 110-4 through the microphone, and the second signal level value 1202 may represent a signal level value obtained by receiving an ultrasonic signal output from the sixth speaker 110-6 through the microphone.

Referring again to FIG. 10, in operation S1020, the electronic device 100 may detect a frequency at which a difference between signal level values of transmission signals is at a maximum by analyzing the frequency response characteristics. In an embodiment of the disclosure, the processor 130 may detect a maximum response characteristics difference between signal level values of a plurality of input signals by analyzing the frequency response characteristics. Referring to the frequency response characteristics 1200 shown in FIG. 12 together, the processor 130 may calculate difference values between the first signal level value 1201 and the second signal level value 1202 and detect a frequency $f_k$ at which a maximum value $\beta$ dB of the difference values appears.

In operation S1030, the electronic device 100 may determine frequencies of a plurality of ultrasonic signals output from the two or more speakers based on the detected frequency. In an embodiment of the disclosure, in the case in which a frequency at which a signal level value is at a maximum appears in low-frequency and high-frequency regions, the processor 130 may control the plurality of speakers to output ultrasonic signals having different frequencies to reduce signal interference between ultrasonic signals output from the two or more speakers. In an embodiment of the disclosure, in the case in which a frequency at which a signal level value is at a maximum appears in one frequency band, the processor 130 may control the plurality of speakers to output a plurality of ultrasonic signals by using a frequency belonging to the frequency band.

Referring to FIG. 12 together, the processor 130 may select a speaker (for example, 'fourth speaker 110-4' of FIG. 11) that outputs an ultrasonic signal having the first signal level value 1201 in a frequency band of the detected frequency $f_k$ or higher and may use only the selected speaker to recognize an occupant in the vehicle. The processor 130 may determine an available frequency region of the selected speaker to the frequency band of the detected frequency $f_k$ or higher.

According to two or more speakers being connected to one output terminal and the same ultrasonic signal being output from the two or more speakers, the electronic device 100 according to an embodiment of the disclosure shown in FIGS. 10 to 12 may detect a frequency $f_k$ at which a difference between the signal level values 1201 and 1202 is a maximum value $\beta$ dB by analyzing the frequency response characteristics 1200, and output a plurality of ultrasonic signals by allocating the same frequency or different frequencies to the two or more speakers. Therefore, the electronic device 100 according to an embodiment of the disclosure may provide a technical effect of reducing signal interference according to the same ultrasonic signal being output from two or more speakers, improving quality of ultrasonic signals, and thereby improving accuracy of occupant recognition.

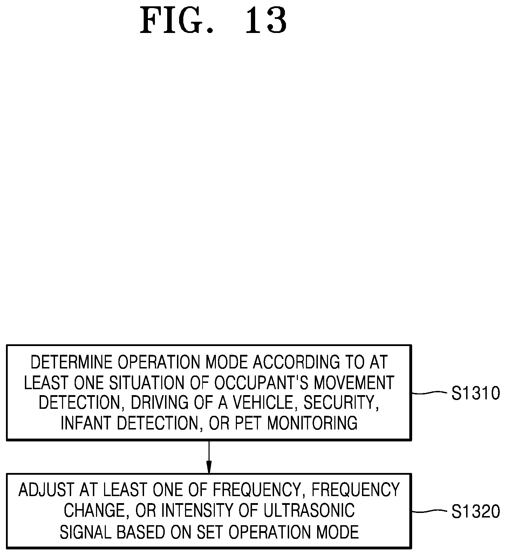

FIG. 13 is a flowchart illustrating a method, performed by the electronic device 100 according to an embodiment of the disclosure, of performing an operation according to a situational mode.

In operation S1310, the electronic device 100 may determine an operation mode according to at least one situation of an occupant's movement detection, driving of a vehicle, security, infant detection, or pet monitoring. In an embodiment of the disclosure, the 'operation mode' may include at least one mode of a sensitive mode for detecting an occupant's movement, a driving mode for recognizing an occupant while the vehicle travels, a security mode for securing the vehicle, an infant detection mode for monitoring an infant in a rear-seat, or a pet monitoring mode for monitoring a pet such as a dog or cat in the vehicle. In an embodiment of the disclosure, the electronic device 100 may receive a user input of selecting any operation mode from among a plurality of operation modes and set a situational operation mode based on the received user input.

In operation S1320, the electronic device 100 may adjust at least one of a frequency, a frequency change, or intensity of an ultrasonic signal based on the set operation mode. For example, according to the operation mode being set to the sensitive mode, the processor 130 (see FIG. 4) of the electronic device 100 may adjust a detection level of a frequency change according to the Doppler effect with respect to a transmission signal reflected from an occupant and received through the microphone to detect an amount of movement of a breathing level even though the occupant's movement is not detected. For example, according to the operation mode being set to the driving mode, the processor 130 may recognize a frequency of noise caused by the engine of the vehicle or a road, and control the plurality of speakers to output an ultrasonic signal having a different frequency from that of the noise or output an antiphase signal having the same frequency as that of the noise to cancel the noise. For example, according to the operation mode being set to the security mode, the processor 130 may adjust a detection level of a frequency change according to the Doppler effect with respect to a transmission signal to a value that is greater than a default value, to detect a great movement. For example, according to the operation mode being set to the infant detection mode, the processor 130 may adjust a detection level of a frequency change according to the Doppler effect with respect to a transmission signal to a value that is smaller than the default value, to accurately detect an occupant in a rear seat of the vehicle. For example, according to the operation mode being set to the pet monitoring mode, the processor 130 may adjust signal intensity of an ultrasonic signal transmitted from the plurality of speakers to a pet to a value that is smaller than a default value.

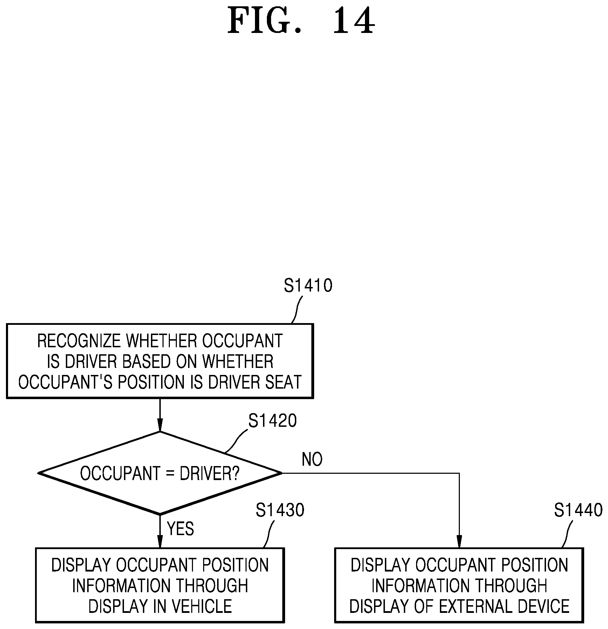

FIG. 14 is a flowchart illustrating a method, performed by the electronic device 100 according to an embodiment of the disclosure, of displaying occupant position information based on whether the occupant is a driver.

In operation S1410, the electronic device 100 may recognize whether an occupant is a driver based on whether the occupant's position is a driver seat. In an embodiment of the disclosure, the processor 130 (see FIG. 4) of the electronic device 100 may recognize an occupant's position and identify whether the recognized occupant's position is the driver seat of the vehicle. Details about a method in which the processor 130 recognizes an occupant's position have been described in detail with reference to FIGS. 1 and 6, and therefore, redundant descriptions will be omitted. The processor 130 may recognize whether the occupant is a driver based on whether the occupant's position is the driver seat.

In operation S1420, the electronic device 100 may identify whether the occupant is a driver.

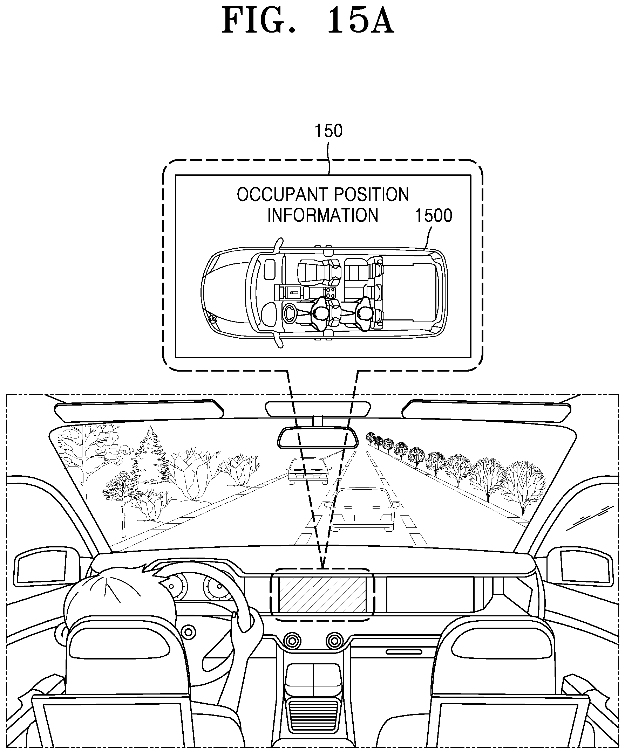

According to the occupant being the driver (operation S1430), the electronic device 100 may display occupant position information through the display in the vehicle. FIG. 15A is a view illustrating an operation, performed by the electronic device 100 according to an embodiment of the disclosure, of displaying occupant position information 1500 through a display in a vehicle. Referring to operation S1430 and FIG. 15A together, the processor 130 may display the occupant position information 1500 through a CID 150 in the vehicle. However, an embodiment of the disclosure is not limited to that shown in FIG. 15A, and the electronic device 100 may display the occupant position information 1500 through at least one of an instrument cluster display, a HUD, a navigation system, or a front-seat display inside the vehicle.

According to the occupant being not the driver (operation S1440), that is, according to the driver being outside the vehicle, the electronic device 100 may display occupant position information through a display of an external device. FIG. 15B is a view illustrating an operation, performed by the electronic device 100 according to an embodiment of the disclosure, of displaying occupant position information through a display of an external device 200. Referring to operation S1440 and FIG. 15B together, according to an occupant's position being identified as being not the driver seat in the vehicle 10, the electronic device 100 may transmit position information of the occupant to the external device 200 (operation S1510). The 'external device 200' may refer to an apparatus or device that is separated from the vehicle 10, not the electronic device 100 installed or mounted in the vehicle 10. In an embodiment of the disclosure, the external device 200 may be, but is not limited to, a mobile device such as a smart phone. However, the external device 200 may be, for example, a tablet PC, a laptop computer, a digital camera, an e-book terminal, a terminal for digital broadcasting, personal digital assistants (PDA), a portable multimedia player (PMP), a navigation system, or an MP3 player. As another example, the external device 200 may be implemented as a wearable device, such as a smartwatch, a glass type augmented reality device (for example, AR glasses), a head-mounted device (HMD), or a body-attached device (for example, a skin pad).

In an embodiment of the disclosure, the external device 200 may further include a communication interface configured to perform data transmission/reception to/from the external device 200 through a wireless communication network. The communication interface may include, but is not limited to, a hardware communication device that performs short-range wireless data communication, such as, for example, Wireless-Fidelity (Wi-Fi), Wireless broadband (Wibro), World Interoperability for Microwave Access (Wimax), WiFi-Direct, Radio Frequency Identification (RFID), Infrared Data Association (IrDA), Ultra Wideband (UWB), ZigBee, Near Field Communication (NFC), or Bluetooth™. However, the communication interface may include a hardware communication device that performs data communication using a mobile communication network, such as Code Division Multiple Access (CDMA), Wideband Code Division Multiple Access (WCDMA), 3rd Generation (3G), 4th Generation (4G), 5th Generation (5G), Long Term Evolution (LTE), 5G Sub 6, 5G New Radio (5G NR), or millimeter waves (mmWave).

In operation S1520 of FIG. 15B, the external device 200 may display occupant position information 1502 received from the electronic device 100. In an embodiment shown in FIG. 15B, the occupant position information 1502 displayed on a display of the external device 200 may be implemented as a graphic user interface (UI) that graphically shows a person in the vehicle. However, the disclosure is not limited to the embodiment shown in FIG. 15B, and the electronic device 100 according to an embodiment of the disclosure may transmit position information about an intruder from outside the vehicle or an infant left unattended to the external device 200. The external device 200 may display the information about the intruder from outside or the infant left unattended.

The electronic device 100 shown in FIGS. 14, 15A, and 15B may provide position information of an occupant in the vehicle to a user, thereby improving user convenience. Also, the electronic device 100 according to an embodiment of the disclosure may provide detection information about an intruder from outside the vehicle or an infant left unattended in the vehicle through the external device 200 (for example, a user's mobile device), thereby providing a technical effect capable of strengthening security and preventing unexpected accidents in advance.

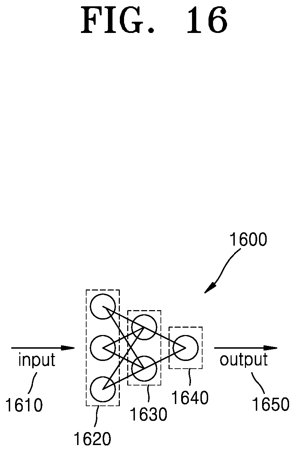

FIG. 16 is a view for describing an operation performed by using an artificial intelligence technique in the electronic device 100 according to an embodiment of the disclosure.

More specifically, at least one of operations, performed by the electronic device 100, of i) transmitting an ultrasonic signal in an inaudible frequency band to an occupant in a vehicle through each of a plurality of speakers and receiving the ultrasonic signal reflected from the occupant through a microphone, ii) calculating a distance of a reflection path of a first ultrasonic signal transmitted from a first speaker among the plurality of speakers based on a time difference between a signal transmission time of a shortest path between the first speaker and the microphone and a time transmission time taken for the first ultrasonic signal transmitted from the first speaker to be reflected from the occupant and then received by the microphone, iii) recognizing a plurality of points having the same reflection path distance as the calculated distance of the reflection path in a cabin of the vehicle, iv) obtaining position information of an intersection between a first parabola connecting the plurality of recognized points and a second parabola obtained based on a reflection path of a second ultrasonic signal output from a second speaker among the plurality of speakers, and v) identifying a position of the occupant based on the obtained position information of the intersection may be performed by using an artificial intelligence (AI) technique that performs computation through a neural network.

The artificial intelligence technique (hereinafter, referred to as an 'AI technique') may be a technique of obtaining a desired result by performing processing such as analysis and/or classification on input data based on computation through a neural network.

The AI technique may be implemented by using an algorithm. Here, an algorithm or algorithm set for implementing the AI technique refers to a neural network. Here, the neural network may receive input data and perform computation for analysis and/or classification described above, thereby outputting result data. For the neural network to output correct result data corresponding to input data, the neural network may need to be trained. Here, 'training' may include training the neural network to itself find and learn a method of analyzing input data input to the neural network, a method of classifying the input data, and/or a method of extracting a feature required to generate result data from the input data. More specifically, through a training process, the neural network may train training data (for example, a plurality of different images) to optimize weight values in the neural network. Then, input data may be processed through the neural network having the optimized weight values and a desired result may be output.

A neural network may be classified as a deep neural network in the case in which the number of hidden layers, which are internal layers that perform computation, is multiple, that is, in the case in which a depth of the neural network that performs computation increases. Neural networks include, but are not limited to, convolutional neural networks, recurrent neural networks, restricted Boltzmann machines, deep belief networks, bidirectional recurrent deep neural networks, and deep Q-networks. Also, the neural networks may be subdivided. For example, the convolutional neural networks may be subdivided into Deep Convolution Neural Networks (D-CNN) or Capsnet neural networks (not shown).

An 'AI model' may refer to a neural network including at least a layer that operates to receive input data and output a desired result. Also, the 'AI model' may refer to an algorithm or a set of a plurality of algorithms, which performs computation through a neural network to output a desired result, a processor for executing the algorithm (or the set of algorithms), software for executing the algorithm (or the set of algorithms), or hardware for executing the algorithm (or the set of algorithms).

At least one of the above-described operations of i) transmitting the ultrasonic signal in the inaudible frequency band to the occupant in the vehicle through each of the plurality of speakers and receiving the ultrasonic signal reflected from the occupant through the microphone, ii) calculating the distance of the reflection path of the first ultrasonic signal transmitted from the first speaker among the plurality of speakers based on the time difference between the signal transmission time of the shortest path between the first speaker and the microphone and the time transmission time taken for the first ultrasonic signal transmitted from the first speaker to be reflected from the occupant and then received by the microphone, iii) recognizing the plurality of points having the same reflection path distance as the calculated distance of the reflection path in the cabin of the vehicle, iv) obtaining the position information of the intersection between the first parabola connecting the plurality of recognized points and the second parabola obtained based on the reflection path of the second ultrasonic signal output from the second speaker among the plurality of speakers, and v) identifying the position of the occupant based on the obtained position information of the intersection may be performed based on an AI model.

Referring to FIG. 16, a neural network 1600 may be trained by receiving training data. Also, the trained neural network 1600 may receive input data 1610 through an input terminal 1620, and the input terminal 1620, a hidden layer 1630, and an output terminal 1640 may perform computation for outputting output data 1650 by analyzing the input data 1610 and data transferred from a previous layer. FIG. 16 shows a case in which the hidden layer 1630 is a single layer. However, this may be an example and the hidden layer 1630 may be composed of a plurality of layers.

In an embodiment of the disclosure, the neural network 1600 may be trained to i) perform an operation of subtracting a signal transmission time of a shortest path from a sum of a first time taken for a first ultrasonic signal output from the first speaker to arrive at an occupant and a second time taken for the first ultrasonic signal to be reflected from the occupant and received by the microphone to calculate a difference between the transmission times and ii) calculate a distance of a reflection path of the ultrasonic signal output from the first speaker with respect to the shortest path through an operation of multiplying the calculated time difference by a speed of sound.

In an embodiment of the disclosure, the neural network 1600 may be trained to i) output a third ultrasonic signal through a third speaker among the plurality speakers and obtain a third parabola based on a reflection path of the third ultrasonic signal, ii) recognize an intersection of the first parabola, the second parabola, and the third parabola, and iii) obtain position information of the recognized intersection.

In an embodiment of the disclosure, the neural network 1600 may be trained to allocate an output time of an ultrasonic signal to each of the plurality of speakers.

In an embodiment of the disclosure, the neural network 1600 may be trained to allocate different frequencies to the plurality of speakers, respectively.

In an embodiment of the disclosure, the neural network 1600 may be trained to i) when an ultrasonic signal is output simultaneously from two or more speakers, obtain frequency response characteristics of the two or more speakers through frequency sweep, ii) detect a frequency at which a difference between signal level values of transmission signals is at a maximum by analyzing the frequency response characteristics of the two or more speakers, and iii) determine frequencies of a plurality of ultrasonic signals output from the two or more speakers based on the detected frequency.

In an embodiment of the disclosure, data or program codes related to the neural network 1600 that performs at least one of the above-described operations of i) transmitting the ultrasonic signal in the inaudible frequency band to the occupant in the vehicle through each of the plurality of speakers and receiving the ultrasonic signal reflected from the occupant through the microphone, ii) calculating the distance of the reflection path of the first ultrasonic signal transmitted from the first speaker among the plurality of speakers based on the time difference between the signal transmission time of the shortest path between the first speaker and the microphone and the time transmission time taken for the first ultrasonic signal transmitted from the first speaker to be reflected from the occupant and then received by the microphone, iii) recognizing the plurality of points having the same reflection path distance as the calculated distance of the reflection path in the cabin of the vehicle, iv) obtaining the position information of the intersection between the first parabola connecting the plurality of recognized points and the second parabola obtained based on the reflection path of the second ultrasonic signal output from the second speaker among the plurality of speakers, and v) identifying the position of the occupant based on the obtained position information of the intersection may be stored in the memory 140 (see FIG. 4), and training using the neural network 1600 may be performed by the processor 130 (see FIG. 4). In this case, the processor 130 may include an AI-dedicated processor such as a neural processing unit (NPU).

In an embodiment of the disclosure, the data or program codes related to the neural network 1600 that performs at least one of the above-described operations of i) transmitting the ultrasonic signal in the inaudible frequency band to the occupant in the vehicle through each of the plurality of speakers and receiving the ultrasonic signal reflected from the occupant through the microphone, ii) calculating the distance of the reflection path of the first ultrasonic signal transmitted from the first speaker among the plurality of speakers based on the time difference between the signal transmission time of the shortest path between the first speaker and the microphone and the time transmission time taken for the first ultrasonic signal transmitted from the first speaker to be reflected from the occupant and then received by the microphone, iii) recognizing the plurality of points having the same reflection path distance as the calculated distance of the reflection path in the cabin of the vehicle, iv) obtaining the position information of the intersection between the first parabola connecting the plurality of recognized points and the second parabola obtained based on the reflection path of the second ultrasonic signal output from the second speaker among the plurality of speakers, and v) identifying the position of the occupant based on the obtained position information of the intersection may be stored in the memory 140, and training using the neural network 1600 may be performed by the processor 130.

However, the disclosure is not limited thereto, and the neural network 1600 that performs at least one of the above-described operations of i) transmitting the ultrasonic signal in the inaudible frequency band to the occupant in the vehicle through each of the plurality of speakers and receiving the ultrasonic signal reflected from the occupant through the microphone, ii) calculating the distance of the reflection path of the first ultrasonic signal transmitted from the first speaker among the plurality of speakers based on the time difference between the signal transmission time of the shortest path between the first speaker and the microphone and the time transmission time taken for the first ultrasonic signal transmitted from the first speaker to be reflected from the occupant and then received by the microphone, iii) recognizing the plurality of points having the same reflection path distance as the calculated distance of the reflection path in the cabin of the vehicle, iv) obtaining the position information of the intersection between the first parabola connecting the plurality of recognized points and the second parabola obtained based on the reflection path of the second ultrasonic signal output from the second speaker among the plurality of speakers, and v) identifying the position of the occupant based on the obtained position information of the intersection may be implemented in another device (not shown) or a processor (not shown) that is separated from the electronic device 100.

The above-described operations through the neural network 1600 may be performed by a server 300 (see FIGS. 17 and 18) capable of communicating with the electronic device 100 according to an embodiment of the disclosure through a wireless communication network. Communication between the electronic device 100 and the server 300 will be described with reference to FIGS. 17 and 18.

FIG. 17 shows the electronic device 100 according to an embodiment of the disclosure, interworking with the server 300.

FIG. 18 is a view for describing FIG. 17 in detail.

The electronic device 100 may include a speaker 110, a microphone 120, a processor 130, memory 140, and a display 150. Referring to FIG. 17, the electronic device 100 may further include a communication interface 160. The speaker 110, the microphone 120, the processor 130, the memory 140, and the display 150 shown in FIG. 17 may be the same as the speaker 110, the microphone 120, the processor 130, the memory 140, and the display 150 shown in FIG. 4 and described, respectively, and therefore, redundant descriptions will be omitted.

The server 300 may transmit/receive data to/from the electronic device 100 through the communication network 400 and process the data.

Referring to FIGS. 17 and 18 together, the server 300 may include a communication interface 310 that communicates with the electronic device 100, a processor 320 that executes at least one instruction, and memory 330.

The server 300 may train an AI model and store the trained AI model. Also, the server 300 may use the trained AI model to perform at least one of the above-described operations of i) transmitting the ultrasonic signal in the inaudible frequency band to the occupant in the vehicle through each of the plurality of speakers and receiving the ultrasonic signal reflected from the occupant through the microphone, ii) calculating the distance of the reflection path of the first ultrasonic signal transmitted from the first speaker among the plurality of speakers based on the time difference between the signal transmission time of the shortest path between the first speaker and the microphone and the time transmission time taken for the first ultrasonic signal transmitted from the first speaker to be reflected from the occupant and then received by the microphone, iii) recognizing the plurality of points having the same reflection path distance as the calculated distance of the reflection path in the cabin of the vehicle, iv) obtaining the position information of the intersection between the first parabola connecting the plurality of recognized points and the second parabola obtained based on the reflection path of the second ultrasonic signal output from the second speaker among the plurality of speakers, and v) identifying the position of the occupant based on the obtained position information of the intersection.

Generally, the electronic device 100 may have limitations in a storage capacity of the memory 140 (see FIG. 4), a computation processing speed of the processor 130 (see FIG. 4), capability of collecting training data sets, etc., compared to the server 300. Accordingly, an operation requiring storage of a large amount of data and a large amount of computation may be performed by the server 300 and necessary data and/or an AI model may be transmitted to the electronic device 100 through the communication network 400. The electronic device 100 may perform a required operation quickly and easily by receiving necessary data and/or an AI model through the server 300 and using the necessary data and/or AI model without mass memory and a processor having fast computing capability.

In an embodiment of the disclosure, the server 300 may include the neural network 1600 described with reference to FIG. 16.

Components of the server 300 will be described in detail with reference to FIG. 18. Referring to FIG. 18, the server 300 may include the communication interface 310, the processor 320, and the memory 330.

The communication interface 310 may communicate with an external device through the wireless communication network 400. Here, the external device (not shown) may include a server capable of performing at least one of operations required by the electronic device 100 or transmitting data, etc. required by the electronic device 100.

The communication interface 310 may include at least one communication module, such as a short-range communication module, a wired communication module, a mobile communication module, and a broadcast receiving module. Here, the at least one communication module may be a communication module capable of performing data transmission/reception through a network based on a communication standard, such as a tuner that performs broadcast reception, Bluetooth, Wi-Fi, Wibro, WiMAX, CDMA, WCDMA, the Internet, 3G, 4G, 5G, and/or a communication method using millimeter wave (mmWave).

The mobile communication module included in the communication interface 310 may communicate with another device (for example, the 'electronic device 100') located at a long distance through a communication network based on a communication standard, such as 3G, 4G (LTE), and/or 5G. In an embodiment of the disclosure, the electronic device 100 may further include the communication interface 160, and the communication interface 310 of the server 300 may transmit/receive data to/from the communication interface 160 of the electronic device 100 by wire or wirelessly.

The processor 320 may control overall operations of the server 300. For example, the processor 320 may execute at least one of one or more instructions or programs of the server 300 to perform required operations.

The memory 330 may store at least one of one or more instructions, programs, or data required by the server 300 to perform a preset operation. Also, the memory 330 may store data required by the server 300 to perform computation according to a neural network.

In an embodiment of the disclosure, the server 300 may store the neural network 1600 described with reference to FIG. 16. The neural network 1600 may be stored in at least one of the processor 320 or the memory 330. The neural network 1600 stored in the server 300 may be a trained neural network.

Also, the server 300 may transmit the trained neural network 1600 (see FIG. 16) to the communication interface 160 of the electronic device 100 through the communication interface 310. The electronic device 100 may obtain the trained neural network 1600, store the trained neural network 1600, and obtain desired output data through the neural network 1600.

The disclosure may provide an electronic device 100 mounted in a vehicle 10. The electronic device 100 according to an embodiment of the disclosure may include a plurality of speakers 110 configured to transmit an ultrasonic signal in an inaudible frequency band to an occupant in the vehicle, a microphone 120 configured to receive the ultrasonic signal, at least one processor 130 including a processing circuitry, and memory 140 storing one or more instructions. The one or more instructions, when executed by the at least one processor 130 individually or collectively, may cause the electronic device 100 to measure a time difference between a signal transmission time of a shortest path between a first speaker 110-1 among the plurality of speakers 110 and the microphone 120 and a signal transmission time taken for a first ultrasonic signal transmitted from the first speaker 110-1 to be reflected from the occupant and then received by the microphone 120. The one or more instructions, when executed by the at least one processor 130 individually or collectively, may cause the electronic device 100 to calculate a distance of a reflection path of the first ultrasonic signal based on the time difference. The one or more instructions, when executed by the at least one processor 130 individually or collectively, may cause the electronic device 100 to recognize a plurality of points having the same reflection path distance as the calculated distance of the reflection path in a cabin of the vehicle and obtain position information of an intersection between a first parabola connecting the plurality of points and a second parabola obtained based on a reflection path of a second ultrasonic signal output from a second speaker 110-2 among the plurality of speakers 110. The one or more instructions, when executed by the at least one processor 130 individually or collectively, may cause the electronic device 100 to identify a position of the occupant based on the position information of the intersection.

In an embodiment of the disclosure, the one or more instructions, when executed by the at least one processor 130 individually or collectively, may cause the electronic device 100 to calculate the time difference by performing an operation of subtracting a third time which is the time transmission time of the shortest path from a sum of a first time taken for the first ultrasonic signal output from the first speaker 110-1 to arrive at the occupant and a second time taken for the first ultrasonic signal to be reflected from the occupant and then received by the microphone 120. The one or more instructions, when executed by the at least one processor 130 individually or collectively, may cause, the electronic device 100 to calculate the distance of the reflection path of the first ultrasonic signal with respect to the shortest path through an operation of multiplying the time difference by a speed of sound.

In an embodiment of the disclosure, the one or more instructions, when executed by the at least one processor 130 individually or collectively, may cause the electronic device 100 to calculate a distance of the reflection path of the second ultrasonic signal based on a time difference between a signal transmission time of a shortest path between the second speaker 110-2 and the microphone 120 and a signal transmission time taken for the second ultrasonic signal transmitted from the second speaker 110-2 to be reflected from the occupant and then received by the microphone 120. The one or more instructions, when executed by the at least one processor 130 individually or collectively, may cause the electronic device 100 to recognize a plurality of points having the same reflection path distance as the calculated distance of the reflection path in the cabin of the vehicle and obtain the second parabola by connecting the plurality of points.

In an embodiment of the disclosure, the one or more instructions, when executed by the at least one processor 130 individually or collectively, may cause the electronic device 100 to output a third ultrasonic signal through a third speaker 110-3 among the plurality of speakers 110 and obtain a third parabola based on a reflection path of the third ultrasonic signal. The one or more instructions, when executed by the at least one processor 130 individually or collectively, may cause the electronic device 100 to recognize an intersection of the first parabola, the second parabola, and the third parabola and obtain position information of the intersection.

In an embodiment of the disclosure, the one or more instructions, when executed by the at least one processor 130 individually or collectively, may cause the electronic device 100 to obtain a negative sum of an ultrasonic signal received through the microphone 120 and a reference signal for each of the plurality of speakers 110, the reference signal having been previously obtained. The reference signal may include intrinsic noise or distortion depending on characteristics and a position of each of the plurality of speakers 110.

In an embodiment of the disclosure, the one or more instructions, when executed by the at least one processor 130 individually or collectively, may cause the electronic device 100 to recognize a frequency of noise generated by an engine of the vehicle or a road on which the vehicle travels and output the ultrasonic signal by using a frequency that is different from the recognized frequency.

In an embodiment of the disclosure, the one or more instructions, when executed by the at least one processor 130 individually or collectively, may cause the electronic device 100 to recognize a frequency of noise generated by an engine of the vehicle or a road on which the vehicle travels and remove the noise from the ultrasonic signal by outputting an antiphase signal having the recognized frequency.

In an embodiment of the disclosure, the one or more instructions, when executed by the at least one processor 130 individually or collectively, may cause the electronic device 100 to transmit a plurality of ultrasonic signals sequentially by allocating an output time of an ultrasonic signal to each of the plurality of speakers 110, and sequentially receive, through the microphone 120, the plurality of ultrasonic signals transmitted from the plurality of speakers 110 and reflected from the occupant in time order.

In an embodiment of the disclosure, the one or more instructions, when executed by the at least one processor 130 individually or collectively, may cause the electronic device 100 to transmit a plurality of ultrasonic signals by respectively allocating different frequencies to the plurality of speakers 110 and receive the plurality of ultrasonic signals having the different frequencies through the microphone 120. The one or more instructions, when executed by the at least one processor 130 individually or collectively, may cause the electronic device 100 to calculate a distance of a reflection path for each of the plurality of speakers 110 by analyzing transmission times of the plurality of ultrasonic signals by performing frequency separation on the plurality of received ultrasonic signals.

In an embodiment of the disclosure, in a case that one ultrasonic signal is output simultaneously from two or more speakers, the one or more instructions, when executed by the at least one processor 130 individually or collectively, may cause the electronic device 100 to obtain frequency response characteristics of the two or more speakers through frequency sweep. The one or more instructions, when executed by the at least one processor 130 individually or collectively, may cause the electronic device 100 to detect a frequency at which a difference between signal level values of transmission signals is at a maximum by analyzing the frequency response characteristics of the two or more speakers, and determine frequencies of a plurality of ultrasonic signals output from the two or more speakers based on the detected frequency.

In an embodiment of the disclosure, the one or more instructions, when executed by the at least one processor 130 individually or collectively, may cause the electronic device 100 to determine an operation mode according to at least one situation of movement detection of the occupant, driving of the vehicle, security, infant detection, or pet monitoring. the one or more instructions, when executed by the at least one processor 130 individually or collectively, may cause the electronic device 100 to adjust at least one of a frequency, a frequency change, or intensity of the ultrasonic signal based on the operation mode.

In an embodiment of the disclosure, the one or more instructions, when executed by the at least one processor 130 individually or collectively, may cause the electronic device 100 to recognize whether the occupant is a driver based on whether a position of the occupant is a driver seat. The one or more instructions, when executed by the at least one processor 130 individually or collectively, may cause the electronic device 100 to display information about the position of the occupant through any one of a display inside the vehicle or a display of an external device based on a result of the recognizing whether the occupant is the driver.

The disclosure provides a method, performed by an electronic device 100 mounted in a vehicle, of recognizing an occupant. In an embodiment of the disclosure, an operation method of the electronic device 100 may include transmitting an ultrasonic signal in an inaudible frequency band to an occupant in the vehicle through each of a plurality of speakers 110 and receiving the ultrasonic signal reflected from the occupant through a microphone 120 (S210). The operation method of the electronic device 100 may include calculating a distance of a reflection path of a first ultrasonic signal transmitted from a first speaker 110-1 among the plurality of speakers 110, based on a time difference between a signal transmission time of a shortest path between the first speaker 110-1 and the microphone 120 and a transmission time taken for the first ultrasonic signal to be reflected from the occupant and then received through the microphone 120 (S220). The operation method of the electronic device 100 may include recognizing a plurality of points having the same reflection path distance as the calculated distance of the reflection path in a cabin of the vehicle (S230). The operation method of the electronic device 100 may include obtaining position information of an intersection between a first parabola connecting the plurality of points and a second parabola obtained based on a reflection path of a second ultrasonic signal output from a second speaker 110-2 among the plurality of speakers 110 (S240). The operation method of the electronic device 100 may include identifying a position of the occupant based on the position information of the intersection (S250).

In an embodiment of the disclosure, the calculating of the distance of the reflection path (S220) may include calculating the time difference by performing an operation of subtracting the signal transmission time of the shortest path from a sum of a first time taken for the first ultrasonic signal to arrive at the occupant and a second time taken for the first ultrasonic signal to be reflected from the occupant and received by the microphone 120. The calculating of the distance of the reflection path (S220) may include calculating the distance of the reflection path of the ultrasonic signal output from the first speaker 110-1 with respect to the shortest path through an operation of multiplying the time difference by a speed of sound.

In an embodiment of the disclosure, the operation method of the electronic device 100 may further include outputting a third ultrasonic signal through a third speaker 110-3 among the plurality of speakers 110 and obtaining a third parabola based on a reflection path of the third ultrasonic signal (S510). The obtaining of the intersection (S240) may include recognizing an intersection of the first parabola, the second parabola, and the third parabola (S520), and obtaining position information of the intersection (S530).

In an embodiment of the disclosure, the transmitting of the ultrasonic signal and the receiving of the ultrasonic signal (S210) may include recognizing a frequency of noise generated by an engine of the vehicle or a road on which the vehicle travels (S710), and transmitting the ultrasonic signal by using a frequency that is different from the recognized frequency.

In an embodiment of the disclosure, the transmitting of the ultrasonic signal and the receiving of the ultrasonic signal (S210) may include recognizing a frequency of noise generated by an engine of the vehicle or a road on which the vehicle travels (S710), and removing the noise from the ultrasonic signal by outputting an antiphase signal having the recognized frequency.

In an embodiment of the disclosure, the transmitting of the ultrasonic signal and the receiving of the ultrasonic signal (S210) may include transmitting a plurality of ultrasonic signals sequentially by allocating an output time of an ultrasonic signal to each of the plurality of speakers 110 (S810), and sequentially receiving, through the microphone 120, the plurality of ultrasonic signals transmitted from the plurality of speakers 110 in time order (S820).

In an embodiment of the disclosure, the transmitting of the ultrasonic signal and the receiving of the ultrasonic signal (S210) may include transmitting a plurality of ultrasonic signals by respectively allocating different frequencies to the plurality of speakers 110 (S910), and receiving the plurality of ultrasonic signals having the different frequencies through the microphone 120 (S920). The recognizing of the plurality of points having the same reflection path distance as the calculated distance of the reflection path (S230) may include calculating a distance of a reflection path for each of the plurality of speakers 110 by analyzing transmission times of the plurality of ultrasonic signals by performing frequency separation on the plurality of received ultrasonic signals (S930).

In an embodiment of the disclosure, the transmitting of the ultrasonic signal and the receiving of the ultrasonic signal (S210) may include when an ultrasonic signal is output simultaneously from two or more speakers, obtaining frequency response characteristics of the two or more speakers through frequency sweep (S1010). The transmitting of the ultrasonic signal and the receiving of the ultrasonic signal (S210) may include detecting a frequency at which a difference between signal level values of transmission signals is at a maximum by analyzing the frequency response characteristics of the two or more speakers (S1020), and setting frequencies of a plurality of ultrasonic signals output from the two or more speakers based on the detected frequency (S1030).

In an embodiment of the disclosure, the operation method of the electronic device 100 may further include recognizing whether the occupant is a driver of the vehicle (S1410), and displaying information about the position of the occupant through any one of a display inside the vehicle or a display of an external device based on the recognized result (S1430 and S1440).

The disclosure provides a computer program product including a computer-readable storage medium. The storage medium may include instructions readable by an electronic device 100 mounted in a vehicle to cause the electronic device 100 to transmit an ultrasonic signal in an inaudible frequency band to an occupant in the vehicle through each of a plurality of speakers 110, receive the ultrasonic signal reflected from the occupant through a microphone 120, calculate a distance of a reflection path of a first ultrasonic signal transmitted from a first speaker 110-1 among the plurality of speakers 110, based on a time difference between a signal transmission time of a shortest path between the first speaker 110-1 and the microphone 120 and a transmission time taken for the first ultrasonic signal to be reflected from the occupant and then received through the microphone 120, recognize a plurality of points having the same reflection path distance as the calculated distance of the reflection path in a cabin of the vehicle, obtain position information of an intersection between a first parabola connecting the plurality of points and a second parabola obtained based on a reflection path of a second ultrasonic signal output from a second speaker 110-2 among the plurality of speakers 110, and identify a position of the occupant based on the position information of the intersection.

A program that is executed by the electronic device 100 described in this specification may be implemented with a hardware component, a software component, and/or a combination of a hardware component and a software component. The program may be performed by all systems capable of executing computer-readable instructions.

The software may include a computer program, code, instructions, or a combination of one or more of these, and may configure a processing device to perform a desired operation or may independently or collectively command the processing device.

The software may be implemented as a computer program including instructions stored in computer-readable storage media. The computer-readable storage media may include, for example, magnetic storage media (for example, ROM, RAM, floppy disks, hard disks, etc.) and optical recording media (for example, compact disc read only memory (CD-ROM) and digital video disks (DVDs)). The computer-readable storage media may be distributed to computer systems over a network, in which computer-readable codes may be stored and executed in a distributed manner. The media may be readable by a computer, stored in memory, and executed by a processor.

The computer-readable storage media may be provided in the form of non-transitory storage media. Herein, 'non-transitory' means that the storage media do not include a signal and are tangible, without meaning that data is semi-permanently or temporarily stored in the storage media. For example, the 'non-transitory storage medium' may include a buffer in which data is temporarily stored.

The program according to the embodiments disclosed in this specification may be included in a computer program product and provided. The computer program product may be traded as a product between a seller and a purchaser.

The computer program product may include a software program and computer-readable storage media in which the software program is stored. For example, the computer program product may include a product (for example, a downloadable application) in the form of a software program that is electronically distributed through a manufacturer of an electronic device or an electronic market (for example, Samsung Galaxy Store™ and Google Play Store™). For electronic distribution, at least a part of the software program may be stored on storage media or may be created temporarily. In this case, the storage media may be storage media of a cloud server of a manufacturing company of the vehicle 10, a server of a manufacturing company of the electronic device 100, a server of an electronic market, or a relay server that temporarily stores a software program.

In a system configured with the electronic device 100, the server 300 (see FIGS. 17 and 18), and another electronic device, the computer program product may include a storage medium of the server 300 or a storage medium of the other electronic device. Also, in a case that there is a third device (for example, a mobile device such as a smart phone) communicating with the electronic device 100, the computer program product may include a storage medium of the third device. Also, the computer program product may include a software program that is transmitted from the electronic device 100 to the other electronic device or the third device or from the third device to the electronic device 100.

In this case, one of the electronic device 100, the other electronic device or the third device (for example, a mobile device such as a smart phone) may execute the computer program product to perform the method according to the embodiments of the disclosure. Also, two or more of the electronic device 100, the other electronic device, and the third device may execute the computer program product to distributively perform the method according to the embodiments of the disclosure.

For example, the electronic device 100 may execute the computer program product stored in the memory 140 (see FIG. 4) to control the other electronic device communicating with the electronic device 100 to perform the method according to the embodiments of the disclosure.

As another example, the third device may execute the computer program product to control an electronic device communicating with the third device to perform the method according to the embodiments of the disclosure.

In the case in which the third device executes the computer program product, the third device may download the computer program product from the electronic device 100 and execute the downloaded computer program product. Also, the third device may execute a pre-loaded computer program product to perform the method according to the embodiments of the disclosure.

Although the embodiments of the disclosure have been described above by limited examples and drawings, it will be obvious to those skilled in the art that various modifications and variations can be made from the above description. For example, effective results may be achieved even though the described techniques are performed in a different order than described, and/or components such as the described computer systems or modules are combined or combined in a different manner than described, or are replaced or substituted by other components or equivalents.

## Claims

1. An electronic device (100) mounted in a vehicle, the electronic device (100) comprising:

   a plurality of speakers (110) configured to transmit an ultrasonic signal in an inaudible frequency band to an occupant in the vehicle;
   a microphone (120) configured to receive the ultrasonic signal;
   at least one processor (130) including a processing circuitry; and
   memory (140) storing one or more instructions,
   wherein
   the one or more instructions, when executed by the at least one processor (130) individually or collectively, cause the electronic device (100) to
   measure a time difference between a signal transmission time of a shortest path between a first speaker (110-1) among the plurality of speakers (110) and the microphone (120) and a signal transmission time taken for a first ultrasonic signal transmitted from the first speaker (110-1) to be reflected from the occupant and then received by the microphone (120),
   calculate a distance of a reflection path of the first ultrasonic signal based on the time difference,
   recognize a first plurality of points having the same reflection path distance as the calculated distance of the reflection path in a cabin of the vehicle,
   obtain position information of an intersection between a first parabola connecting the first plurality of points and a second parabola obtained based on a reflection path of a second ultrasonic signal output from a second speaker (110-2) among the plurality of speakers (110), and
   identify a position of the occupant based on the position information of the intersection.

2. The electronic device (100) of claim 1, wherein

   the one or more instructions, when executed by the at least one processor (130) individually or collectively, cause the electronic device (100) to

calculate the time difference by performing an operation of subtracting a third time which is the signal transmission time of the shortest path from a sum of a first time taken for the first ultrasonic signal output from the first speaker (110-1) to arrive at the occupant and a second time taken for the first ultrasonic signal to be reflected from the occupant and then received by the microphone (120), and

calculate the distance of the reflection path of the first ultrasonic signal with respect to the shortest path through an operation of multiplying the time difference by a speed of sound.

3. The electronic device (100) of claim 1 or 2, wherein

the one or more instructions, when executed by the at least one processor (130) individually or collectively, cause the electronic device (100) to

calculate a distance of the reflection path of the second ultrasonic signal based on a time difference between a signal transmission time of a shortest path between the second speaker (110-2) and the microphone (120) and a signal transmission time taken for the second ultrasonic signal transmitted from the second speaker (110-2) to be reflected from the occupant and then received by the microphone (120),

recognize a second plurality of points having the same reflection path distance as the calculated distance of the reflection path in the cabin of the vehicle, and

obtain the second parabola by connecting the second plurality of points.

4. The electronic device (100) of any one of claims 1 to 3, wherein

the one or more instructions, when executed by the at least one processor (130) individually or collectively, cause the electronic device (100) to

output a third ultrasonic signal through a third speaker (110-3) among the plurality of speakers (110), obtain a third parabola based on a reflection path of the third ultrasonic signal,

recognize an intersection of the first parabola, the second parabola, and the third parabola, and obtain position information of the intersection.

5. The electronic device (100) of any one of claims 1 to 4, wherein

the one or more instructions, when executed by the at least one processor (130) individually or collectively, cause the electronic device (100) to

obtain a negative sum of an ultrasonic signal received through the microphone (120) and a reference signal for each of the plurality of speakers (110), the reference signal having been previously obtained,

wherein the reference signal includes intrinsic noise or distortion depending on characteristics and a position of each of the plurality of speakers (110).

6. The electronic device (100) of any one of claims 1 to 5, wherein

the one or more instructions, when executed by the at least one processor (130) individually or collectively, cause the electronic device (100) to

transmit a plurality of ultrasonic signals sequentially by allocating an output time of an ultrasonic signal to each of the plurality of speakers (110), and

sequentially receive, through the microphone (120), the plurality of ultrasonic signals transmitted from the plurality of speakers (110) and reflected from the occupant in time order

7. The electronic device 100 of any one of claims 1 to 5, wherein

the one or more instructions, when executed by the at least one processor (130) individually or collectively, cause the electronic device (100) to

transmit a plurality of ultrasonic signals by respectively allocating different frequencies to the plurality of speakers (110),

receive the plurality of ultrasonic signals having the different frequencies through the microphone (120), and

calculate a distance of a reflection path for each of the plurality of speakers (110) by analyzing transmission times of the plurality of ultrasonic signals by performing frequency separation on the plurality of received ultrasonic signals.

8. The electronic device 100 of any one of claims 1 to 7, wherein

the one or more instructions, when executed by the at least one processor (130) individually or collectively, cause the electronic device (100) to,
in a case that one ultrasonic signal is output simultaneously from two or more speakers, obtain frequency response characteristics of the two or more speakers through frequency sweep,
detect a frequency at which a difference between signal level values of transmission signals is at a maximum by analyzing the frequency response characteristics of the two or more speakers, and
determine frequencies of a plurality of ultrasonic signals output from the two or more speakers based on the detected frequency.

9. A method, performed by an electronic device mounted in a vehicle, of recognizing an occupant, the method comprising:

transmitting an ultrasonic signal in an inaudible frequency band to an occupant in the vehicle through each of a plurality of speakers and receiving the ultrasonic signal reflected from the occupant through a microphone (S210);
calculating a distance of a reflection path of a first ultrasonic signal transmitted from a first speaker among the plurality of speakers, based on a time difference between a signal transmission time of a shortest path between the first speaker and the microphone and a transmission time taken for the first ultrasonic signal to be reflected from the occupant and then received through the microphone (S220);
recognizing a plurality of points having the same reflection path distance as the calculated distance of the reflection path in a cabin of the vehicle (S230);
obtaining position information of an intersection between a first parabola connecting the plurality of points and a second parabola obtained based on a reflection path of a second ultrasonic signal output from a second speaker among the plurality of speakers (S240); and
identifying a position of the occupant based on the position information of the intersection (S250).

10. The method of claim 9, wherein
the calculating of the distance of the reflection path (S220) comprises:

calculating the time difference by performing an operation of subtracting the signal transmission time of the shortest path from a sum of a first time taken for the first ultrasonic signal to arrive at the occupant and a second time taken for the first ultrasonic signal to be reflected from the occupant and received by the microphone; and
calculating the distance of the reflection path of the ultrasonic signal output from the first speaker with respect to the shortest path through an operation of multiplying the time difference by speed of sound.

11. The method of claim 9 or 10, further comprising

outputting a third ultrasonic signal through a third speaker among the plurality of speakers and obtaining a third parabola based on a reflection path of the third ultrasonic signal (S510),
wherein
the obtaining of the intersection (S240) comprises:

recognizing an intersection of the first parabola, the second parabola, and the third parabola (S520); and
obtaining position information of the intersection (S530).

12. The method of any one of claims 9 to 11, wherein
the transmitting of the ultrasonic signal and the receiving of the ultrasonic signal (S210) comprises:

transmitting a plurality of ultrasonic signals sequentially by allocating an output time of an ultrasonic signal to each of the plurality of speakers (S810); and
sequentially receiving, through the microphone, the plurality of ultrasonic signals transmitted from the plurality of speakers in time order (S820)

13. The method of any one of claims 9 to 12, wherein
the transmitting of the ultrasonic signal and the receiving of the ultrasonic signal (S210) comprises:

transmitting a plurality of ultrasonic signals by respectively allocating different frequencies to the plurality of speakers (S910); and
receiving the plurality of ultrasonic signals having the different frequencies through the microphone (S920),

and
the recognizing of the plurality of points having the same reflection path distance as the calculated distance of the reflection path (S230) comprises calculating a distance of a reflection path for each of the plurality of speakers by analyzing transmission times of the plurality of ultrasonic signals (S930) by performing frequency separation on the plurality of received ultrasonic signals.

14. The method of any one of claims 9 to 13, wherein
the transmitting of the ultrasonic signal and the receiving of the ultrasonic signal (S210) comprises:

in a case that an ultrasonic signal is output simultaneously from two or more speakers, obtaining frequency response characteristics of the two or more speakers through frequency sweep (S1010);
detecting a frequency at which a difference between signal level values of transmission signals is at a maximum by analyzing the frequency response characteristics of the two or more speakers (S1020); and
setting frequencies of a plurality of ultrasonic signals output from the two or more speakers based on the detected frequency (S1030).

15. A computer program product comprising a computer-readable storage medium,
the computer-readable storage medium including instructions readable by an electronic device (100) mounted in a vehicle to cause the electronic device (100) to:

transmit an ultrasonic signal in an inaudible frequency band to an occupant in the vehicle through each of a plurality of speakers (110) and receive the ultrasonic signal reflected from the occupant through a microphone (120);
calculate a distance of a reflection path of a first ultrasonic signal transmitted from a first speaker (110-1) among the plurality of speakers (110), based on a time difference between a signal transmission time of a shortest path between the first speaker (110-1) and the microphone (120) and a transmission time taken for the first ultrasonic signal to be reflected from the occupant and then received through the microphone (120);
recognize a plurality of points having the same reflection path distance as the calculated distance of the reflection path in a cabin of the vehicle;
obtain position information of an intersection between a first parabola connecting the plurality of points and a second parabola obtained based on a reflection path of a second ultrasonic signal output from a second speaker (110-2) among the plurality of speakers (110); and
identify a position of the occupant based on the position information of the intersection.

# FIG. 1

# FIG. 2

```
                    ┌─────────┐
                    │  START  │
                    └─────────┘
                         │
                         ▼
┌─────────────────────────────────────────────┐
│   TRANSMIT ULTRASONIC SIGNAL IN INAUDIBLE    │
│ FREQUENCY BAND TO OCCUPANT THROUGH PLURALITY │──S210
│   OF SPEAKERS AND RECEIVE ULTRASONIC SIGNAL  │
│   REFLECTED FROM OCCUPANT THROUGH MICROPHONE │
└─────────────────────────────────────────────┘
                         │
                         ▼
┌─────────────────────────────────────────────┐
│     CALCULATE DISTANCE OF REFLECTION PATH OF │
│   FIRST ULTRASONIC SIGNAL TRANSMITTED FROM FIRST │
│    SPEAKER, BASED ON TIME DIFFERENCE BETWEEN │
│   SIGNAL TRANSMISSION TIME OF SHORTEST PATH  │──S220
│  BETWEEN FIRST SPEAKER AND MICROPHONE AND SIGNAL │
│ TRANSMISSION TIME TAKEN FOR FIRST ULTRASONIC SIGNAL │
│   TRANSMITTED FROM FIRST SPEAKER TO BE REFLECTED │
│   FROM OCCUPANT AND THEN RECEIVED BY MICROPHONE │
└─────────────────────────────────────────────┘
                         │
                         ▼
┌─────────────────────────────────────────────┐
│     RECOGNIZE PLURALITY OF POINTS HAVING SAME │
│ REFLECTION PATH DISTANCE AS CALCULATED DISTANCE │──S230
│    OF REFLECTION PATH IN CABIN OF VEHICLE    │
└─────────────────────────────────────────────┘
                         │
                         ▼
┌─────────────────────────────────────────────┐
│   OBTAIN POSITION INFORMATION OF INTERSECTION │
│ BETWEEN FIRST PARABOLA CONNECTING PLURALITY OF │
│ RECOGNIZED POINTS AND SECOND PARABOLA OBTAINED │──S240
│   BASED ON REFLECTION PATH OF SECOND ULTRASONIC │
│     SIGNAL OUTPUT FROM SECOND SPEAKER        │
└─────────────────────────────────────────────┘
                         │
                         ▼
┌─────────────────────────────────────────────┐
│        IDENTIFY POSITION OF OCCUPANT BASED ON │──S250
│      POSITION INFORMATION OF INTERSECTION    │
└─────────────────────────────────────────────┘
                         │
                         ▼
                    ┌─────────┐
                    │   END   │
                    └─────────┘
```

# FIG. 3

(A): CALCULATE DISTANCE OF
REFLECTION PATH OF ULTRASONIC
SIGNAL BASED ON TIME DIFFERENCE
BETWEEN SIGNAL TRANSMISSION TIMES

(B): RECOGNIZE PLURALITY
OF POINTS HAVING SAME
REFLECTION PATH DISTANCE
AS CALCULATED DISTANCE
OF REFLECTION PATH

(C): OBTAIN FIRST PARABOLA BY
CONNECTING PLURALITY OF POINTS

(D): RECOGNIZE INTERSECTION
BETWEEN FIRST PARABOLA AND
SECOND PARABOLA AND OBTAIN POSITION
INFORMATION OF INTERSECTION

EP 4 772 909 A1

# FIG. 4

# FIG. 5

S230

OUTPUT THIRD ULTRASONIC SIGNAL THROUGH
THIRD SPEAKER AMONG PLURALITY OF SPEAKERS
AND OBTAIN THIRD PARABOLA BASED ON
REFLECTION PATH OF THIRD ULTRASONIC SIGNAL —S510

RECOGNIZE INTERSECTION OF FIRST PARABOLA,
SECOND PARABOLA AND THIRD PARABOLA —S520

OBTAIN POSITION INFORMATION OF INTERSECTION —S530

S240

S250

# FIG. 6

# FIG. 7

```
                           ┌──────────┐
                           │  START   │
                           └────┬─────┘                    S210
                                │                       ╱
        ┌───────────────────────│───────────────────────────┐
        ╎                       ▼                            ╎
        ╎   ┌──────────────────────────────────────────┐    ╎
        ╎   │ RECOGNIZE FREQUENCY OF NOISE GENERATED    │    ╎
        ╎   │ BY ENGINE OF VEHICLE OR ROAD ON WHICH     ├────╎── S710
        ╎   │ VEHICLE TRAVELS                           │    ╎
        ╎   └──────────────────┬───────────────────────┘    ╎
        ╎                      ▼                             ╎
        ╎   ┌──────────────────────────────────────────┐    ╎
        ╎   │ REMOVE NOISE BY OUTPUTTING ULTRASONIC     │    ╎
        ╎   │ SIGNAL BY USING FREQUENCY THAT IS         │    ╎
        ╎   │ DIFFERENT FROM RECOGNIZED FREQUENCY OR    ├────╎── S720
        ╎   │ OUTPUTTING ANTIPHASE SIGNAL HAVING        │    ╎
        ╎   │ RECOGNIZED FREQUENCY                      │    ╎
        ╎   └──────────────────┬───────────────────────┘    ╎
        └──────────────────────│──────────────────────────┘
                               ▼
                          ┌──────────┐
                          │   S220   │
                          └──────────┘
```

# FIG. 8

START

S210

TRANSMIT PLURALITY OF ULTRASONIC SIGNALS SEQUENTIALLY BY ALLOCATING OUTPUT TIME OF ULTRASONIC SIGNAL TO EACH OF PLURALITY OF SPEAKERS — S810

SEQUENTIALLY RECEIVE PLURALITY OF ULTRASONIC SIGNALS TRANSMITTED FROM PLURALITY OF SPEAKERS AND REFLECTED FROM OCCUPANT THROUGH MICROPHONE, IN TIME ORDER — S820

S220

# FIG. 9

START

ALLOCATE DIFFERENT FREQUENCIES TO PLURALITY OF SPEAKERS AND TRANSMIT PLURALITY OF ULTRASONIC SIGNALS — S910

RECEIVE PLURALITY OF ULTRASONIC SIGNALS HAVING DIFFERENT FREQUENCIES THROUGH MICROPHONE — S920

S210

CALCULATE DISTANCE OF REFLECTION PATH FOR EACH OF PLURALITY OF SPEAKERS BY ANALYZING TRANSMISSION TIMES OF PLURALITY OF ULTRASONIC SIGNALS BY PERFORMING FREQUENCY SEPARATION ON PLURALITY OF RECEIVED ULTRASONIC SIGNALS — S930

S230

S220

# FIG. 10

START

S210

ACCORDING TO ONE ULTRASONIC SIGNAL BEING
SIMULTANEOUSLY OUTPUT FROM TWO OR MORE SPEAKERS,
OBTAIN FREQUENCY RESPONSE CHARACTERISTICS OF
TWO OR MORE SPEAKERS THROUGH FREQUENCY SWEEP

S1010

ANALYZE FREQUENCY RESPONSE CHARACTERISTICS TO
DETECT FREQUENCY AT WHICH DIFFERENCE BETWEEN SIGNAL
LEVEL VALUES OF TRANSMISSION SIGNALS IS AT MAXIMUM

S1020

DETERMINE FREQUENCIES OF PLURALITY OF ULTRASONIC
SIGNALS OUTPUT FROM TWO OR MORE SPEAKERS
BASED ON DETECTED FREQUENCY

S1030

S220

FIG. 11

# FIG. 12

# FIG. 13

DETERMINE OPERATION MODE ACCORDING TO AT
LEAST ONE SITUATION OF OCCUPANT'S MOVEMENT
DETECTION, DRIVING OF A VEHICLE, SECURITY,
INFANT DETECTION, OR PET MONITORING ⎯ S1310

ADJUST AT LEAST ONE OF FREQUENCY, FREQUENCY
CHANGE, OR INTENSITY OF ULTRASONIC
SIGNAL BASED ON SET OPERATION MODE ⎯ S1320

# FIG. 14

S1410

```
┌─────────────────────────────────┐
│   RECOGNIZE WHETHER OCCUPANT     │
│   IS DRIVER BASED ON WHETHER     │
│ OCCUPANT'S POSITION IS DRIVER SEAT│
└─────────────────────────────────┘
```

S1420

OCCUPANT = DRIVER?

NO

YES

S1430

```
┌─────────────────────────┐
│ DISPLAY OCCUPANT POSITION│
│   INFORMATION THROUGH    │
│   DISPLAY IN VEHICLE     │
└─────────────────────────┘
```

S1440

```
┌───────────────────────────┐
│ DISPLAY OCCUPANT POSITION  │
│    INFORMATION THROUGH     │
│ DISPLAY OF EXTERNAL DEVICE │
└───────────────────────────┘
```

# FIG. 15A

# FIG. 15B

MY CAR

OCCUPANT POSITION
INFORMATION

1502

200

S1520

OCCUPANT POSITION
INFORMATION DISPLAY

10

100

S1510

TRANSMIT OCCUPANT
POSITION INFORMATION

EP 4 772 909 A1

# FIG. 16

# FIG. 17

FIG. 18

OCCUPANT RECOGNITION DEVICE — 100

SPEAKER — 110
FIRST SPEAKER — 110-1
SECOND SPEAKER — 110-2
THIRD SPEAKER — 110-3
... 
N$^{TH}$ SPEAKER — 110-n

MICROPHONE — 120

PROCESSOR — 130

DISPLAY — 150
COMMUNICATION INTERFACE — 160
MEMORY — 140

400

SERVER — 300
300

COMMUNICATION INTERFACE — 310
PROCESSOR — 320
DB — 330

**EP 4 772 909 A1**

## INTERNATIONAL SEARCH REPORT

| | International application No. |
|---|---|
| | **PCT/KR2025/015696** |

**A. CLASSIFICATION OF SUBJECT MATTER**

**G01S 15/46**(2006.01)i; **G01S 5/18**(2006.01)i; **G01S 5/30**(2006.01)i; **G01S 15/08**(2006.01)i; **B60R 21/015**(2006.01)i

According to International Patent Classification (IPC) or to both national classification and IPC

**B. FIELDS SEARCHED**

Minimum documentation searched (classification system followed by classification symbols)

G01S 15/46(2006.01); G01S 11/14(2006.01); G01S 15/06(2006.01); G01S 15/88(2006.01); G01S 15/931(2020.01); H04M 1/725(2006.01); H04R 1/08(2006.01); H04W 4/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 차량(vehicle), 초음파(ultrasonic wave), 반사(reflection), 포물선(parabola), 교점 (intersection)

**C. DOCUMENTS CONSIDERED TO BE RELEVANT**

| Category* | Citation of document, with indication, where appropriate, of the relevant passages | Relevant to claim No. |
|---|---|---|
| Y | US 05943295 A (VARGA, Andrew J. et al.) 24 August 1999 (1999-08-24)<br>column 7, line 43 - column 12, line 1; claim 1; and figures 1, 5-7 | 1-3,9-11,15 |
| Y | KR 10-2020-0033364 A (DONGGUK UNIVERSITY INDUSTRY-ACADEMIC COOPERATION FOUNDATION) 30 March 2020 (2020-03-30)<br>paragraphs [0060]-[0075]; claims 1, 4; and figures 1-5 | 1-3,9-11,15 |
| A | KR 10-2021-0067822 A (KOREA POLYTECHNIC UNIVERSITY INDUSTRY ACADEMIC COOPERATION FOUNDATION) 08 June 2021 (2021-06-08)<br>paragraphs [0031]-[0059]; claims 1-8; and figures 1-4 | 1-3,9-11,15 |
| A | US 2017-0019525 A1 (DRIVING MANAGEMENT SYSTEMS, INC.) 19 January 2017 (2017-01-19)<br>paragraphs [0044]-[0220]; claims 1-19; and figures 1-18 | 1-3,9-11,15 |
| A | KR 10-2021-0077978 A (HYUNDAI MOBIS CO., LTD.) 28 June 2021 (2021-06-28)<br>paragraphs [0050]-[0117]; claims 1-30; and figures 1-5 | 1-3,9-11,15 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 January 2026** | **14 January 2026** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**45**

## INTERNATIONAL SEARCH REPORT

| International application No. |
| --- |
| **PCT/KR2025/015696** |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **4-8, 12-14**
because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

International application No.

**PCT/KR2025/015696**

| Patent document cited in search report | | | Publication date (day/month/year) | Patent family member(s) | | | Publication date (day/month/year) |
|---|---|---|---|---|---|---|---|
| US | 05943295 | A | 24 August 1999 | AU | 1999-15262 | A1 | 07 June 1999 |
| | | | | AU | 2000-18202 | A1 | 05 June 2000 |
| | | | | AU | 2000-35225 | A1 | 28 September 2000 |
| | | | | AU | 2001-19588 | A1 | 25 June 2001 |
| | | | | AU | 2001-59640 | A1 | 20 November 2001 |
| | | | | EP | 0952933 | A1 | 03 November 1999 |
| | | | | EP | 0952933 | B1 | 12 January 2005 |
| | | | | EP | 1940088 | A1 | 02 July 2008 |
| | | | | EP | 1940088 | B1 | 30 August 2017 |
| | | | | GB | 2289332 | A | 15 November 1995 |
| | | | | GB | 2289542 | A | 22 November 1995 |
| | | | | GB | 2289653 | A | 29 November 1995 |
| | | | | GB | 2289786 | A | 29 November 1995 |
| | | | | GB | 2301906 | A | 18 December 1996 |
| | | | | GB | 2301922 | A | 18 December 1996 |
| | | | | GB | 2308102 | A | 18 June 1997 |
| | | | | GB | 2323340 | A | 23 September 1998 |
| | | | | GB | 2324864 | A | 04 November 1998 |
| | | | | GB | 2340978 | A | 01 March 2000 |
| | | | | GB | 2360097 | A | 12 September 2001 |
| | | | | GB | 2363638 | A | 02 January 2002 |
| | | | | GB | 2363769 | A | 09 January 2002 |
| | | | | GB | 2369737 | A | 05 June 2002 |
| | | | | GB | 2373117 | A | 11 September 2002 |
| | | | | GB | 2383415 | A | 25 June 2003 |
| | | | | GB | 2405279 | A | 23 February 2005 |
| | | | | GB | 2405931 | A | 16 March 2005 |
| | | | | GB | 2406170 | A | 23 March 2005 |
| | | | | GB | 2406171 | A | 23 March 2005 |
| | | | | GB | 2406646 | A | 06 April 2005 |
| | | | | GB | 2410121 | A | 20 July 2005 |
| | | | | GB | 2435346 | A | 22 August 2007 |
| | | | | JP | 08-175305 | A | 09 July 1996 |
| | | | | JP | 08-198044 | A | 06 August 1996 |
| | | | | JP | 09-175316 | A | 08 July 1997 |
| | | | | JP | 09-189710 | A | 22 July 1997 |
| | | | | JP | 09-240407 | A | 16 September 1997 |
| | | | | JP | 09-501120 | A | 04 February 1997 |
| | | | | JP | 2001-508732 | A | 03 July 2001 |
| | | | | JP | 2002-501459 | A | 15 January 2002 |
| | | | | JP | 2003-532959 | A | 05 November 2003 |
| | | | | JP | 2004-518104 | A | 17 June 2004 |
| | | | | JP | 2004-522932 | A | 29 July 2004 |
| | | | | JP | 2005-203572 | A | 28 July 2005 |
| | | | | JP | 2005-306376 | A | 04 November 2005 |
| | | | | JP | 2008-160584 | A | 10 July 2008 |
| | | | | US | 10358057 | B2 | 23 July 2019 |
| | | | | US | 10573093 | B2 | 25 February 2020 |
| | | | | US | 2001-0000886 | A1 | 10 May 2001 |
| | | | | US | 2001-0002451 | A1 | 31 May 2001 |

Form PCT/ISA/210 (patent family annex) (July 2022)

## INTERNATIONAL SEARCH REPORT
### Information on patent family members

| International application No. |
| --- |
| **PCT/KR2025/015696** |

| Patent document cited in search report | Publication date (day/month/year) | Patent family member(s) | | Publication date (day/month/year) |
| --- | --- | --- | --- | --- |
| | | US | 2001-0003168 A1 | 07 June 2001 |
| | | US | 2001-0015547 A1 | 23 August 2001 |
| | | US | 2001-0015548 A1 | 23 August 2001 |
| | | US | 2001-0020777 A1 | 13 September 2001 |
| | | US | 2001-0024032 A1 | 27 September 2001 |
| | | US | 2001-0028163 A1 | 11 October 2001 |
| | | US | 2001-0029416 A1 | 11 October 2001 |
| | | US | 2001-0035634 A1 | 01 November 2001 |
| | | US | 2001-0037903 A1 | 08 November 2001 |
| | | US | 2001-0037904 A1 | 08 November 2001 |
| | | US | 2001-0038698 A1 | 08 November 2001 |
| | | US | 2001-0042976 A1 | 22 November 2001 |
| | | US | 2001-0042977 A1 | 22 November 2001 |
| | | US | 2001-0048215 A1 | 06 December 2001 |
| | | US | 2001-0054516 A1 | 27 December 2001 |
| | | US | 2002-0005778 A1 | 17 January 2002 |
| | | US | 2002-0027339 A1 | 07 March 2002 |
| | | US | 2002-0027346 A1 | 07 March 2002 |
| | | US | 2002-0029103 A1 | 07 March 2002 |
| | | US | 2002-0059022 A1 | 16 May 2002 |
| | | US | 2002-0082756 A1 | 27 June 2002 |
| | | US | 2002-0089157 A1 | 11 July 2002 |
| | | US | 2002-0092693 A1 | 18 July 2002 |
| | | US | 2002-0093180 A1 | 18 July 2002 |
| | | US | 2002-0095980 A1 | 25 July 2002 |
| | | US | 2002-0101067 A1 | 01 August 2002 |
| | | US | 2002-0116106 A1 | 22 August 2002 |
| | | US | 2002-0121132 A1 | 05 September 2002 |
| | | US | 2002-0125050 A1 | 12 September 2002 |
| | | US | 2002-0140214 A1 | 03 October 2002 |
| | | US | 2002-0140215 A1 | 03 October 2002 |
| | | US | 2002-0166710 A1 | 14 November 2002 |
| | | US | 2002-0179822 A1 | 05 December 2002 |
| | | US | 2002-0188392 A1 | 12 December 2002 |
| | | US | 2002-0198632 A1 | 26 December 2002 |
| | | US | 2003-0001368 A1 | 02 January 2003 |
| | | US | 2003-0002690 A1 | 02 January 2003 |
| | | US | 2003-0009270 A1 | 09 January 2003 |
| | | US | 2003-0015898 A1 | 23 January 2003 |
| | | US | 2003-0023362 A1 | 30 January 2003 |
| | | US | 2003-0036835 A1 | 20 February 2003 |
| | | US | 2003-0039173 A1 | 27 February 2003 |
| | | US | 2003-0056997 A1 | 27 March 2003 |
| | | US | 2003-0058340 A1 | 27 March 2003 |
| | | US | 2003-0075223 A1 | 24 April 2003 |
| | | US | 2003-0116362 A1 | 26 June 2003 |
| | | US | 2003-0121704 A1 | 03 July 2003 |
| | | US | 2003-0125855 A1 | 03 July 2003 |
| | | US | 2003-0136600 A1 | 24 July 2003 |
| | | US | 2003-0155753 A1 | 21 August 2003 |

Form PCT/ISA/210 (patent family annex) (July 2022)

## INTERNATIONAL SEARCH REPORT
### Information on patent family members

| International application No. |
| --- |
| **PCT/KR2025/015696** |

| Patent document cited in search report | Publication date (day/month/year) | Patent family member(s) | | Publication date (day/month/year) |
| --- | --- | --- | --- | --- |
| | | US | 2003-0168838 A1 | 11 September 2003 |
| | | US | 2003-0176959 A1 | 18 September 2003 |
| | | US | 2003-0184065 A1 | 02 October 2003 |
| | | US | 2003-0191568 A1 | 09 October 2003 |
| | | US | 2003-0198767 A1 | 23 October 2003 |
| | | US | 2003-0209893 A1 | 13 November 2003 |
| | | US | 2003-0227382 A1 | 11 December 2003 |
| | | US | 2004-0036261 A1 | 26 February 2004 |
| | | US | 2004-0039509 A1 | 26 February 2004 |
| | | US | 2004-0066287 A1 | 08 April 2004 |
| | | US | 2004-0079150 A1 | 29 April 2004 |
| | | US | 2004-0129478 A1 | 08 July 2004 |
| | | US | 2004-0130442 A1 | 08 July 2004 |
| | | US | 2004-0148057 A1 | 29 July 2004 |
| | | US | 2004-0183287 A1 | 23 September 2004 |
| | | US | 2004-0202049 A1 | 14 October 2004 |
| | | US | 2004-0215382 A1 | 28 October 2004 |
| | | US | 2004-0256842 A1 | 23 December 2004 |
| | | US | 2005-0017488 A1 | 27 January 2005 |
| | | US | 2005-0046584 A1 | 03 March 2005 |
| | | US | 2005-0060069 A1 | 17 March 2005 |
| | | US | 2005-0082799 A1 | 21 April 2005 |
| | | US | 2005-0125117 A1 | 09 June 2005 |
| | | US | 2005-0131607 A1 | 16 June 2005 |
| | | US | 2005-0134440 A1 | 23 June 2005 |
| | | US | 2005-0137786 A1 | 23 June 2005 |
| | | US | 2005-0156417 A1 | 21 July 2005 |
| | | US | 2005-0156457 A1 | 21 July 2005 |
| | | US | 2005-0157435 A1 | 21 July 2005 |
| | | US | 2005-0192727 A1 | 01 September 2005 |
| | | US | 2005-0195383 A1 | 08 September 2005 |
| | | US | 2005-0242555 A1 | 03 November 2005 |
| | | US | 2005-0248136 A1 | 10 November 2005 |
| | | US | 2005-0269810 A1 | 08 December 2005 |
| | | US | 2005-0273218 A1 | 08 December 2005 |
| | | US | 2005-0278098 A1 | 15 December 2005 |
| | | US | 2006-0025897 A1 | 02 February 2006 |
| | | US | 2006-0097494 A1 | 11 May 2006 |
| | | US | 2006-0132350 A1 | 22 June 2006 |
| | | US | 2006-0144630 A1 | 06 July 2006 |
| | | US | 2006-0167595 A1 | 27 July 2006 |
| | | US | 2006-0180371 A1 | 17 August 2006 |
| | | US | 2006-0186713 A1 | 24 August 2006 |
| | | US | 2006-0202452 A1 | 14 September 2006 |
| | | US | 2006-0208169 A1 | 21 September 2006 |
| | | US | 2006-0212193 A1 | 21 September 2006 |
| | | US | 2006-0212194 A1 | 21 September 2006 |
| | | US | 2006-0217864 A1 | 28 September 2006 |
| | | US | 2006-0220842 A1 | 05 October 2006 |
| | | US | 2006-0232052 A1 | 19 October 2006 |

Form PCT/ISA/210 (patent family annex) (July 2022)

## INTERNATIONAL SEARCH REPORT
### Information on patent family members

International application No.

**PCT/KR2025/015696**

| Patent document cited in search report | Publication date (day/month/year) | Patent family member(s) | | | Publication date (day/month/year) |
|---|---|---|---|---|---|
| | | US | 2006-0243043 | A1 | 02 November 2006 |
| | | US | 2006-0244246 | A1 | 02 November 2006 |
| | | US | 2006-0244581 | A1 | 02 November 2006 |
| | | US | 2006-0251293 | A1 | 09 November 2006 |
| | | US | 2006-0261579 | A1 | 23 November 2006 |
| | | US | 2006-0273556 | A1 | 07 December 2006 |
| | | US | 2006-0273558 | A1 | 07 December 2006 |
| | | US | 2006-0282204 | A1 | 14 December 2006 |
| | | US | 2006-0284839 | A1 | 21 December 2006 |
| | | US | 2007-0005202 | A1 | 04 January 2007 |
| | | US | 2007-0005609 | A1 | 04 January 2007 |
| | | US | 2007-0021915 | A1 | 25 January 2007 |
| | | US | 5155307 | A | 13 October 1992 |
| | | US | 5192838 | A | 09 March 1993 |
| | | US | 5231253 | A | 27 July 1993 |
| | | US | 5233141 | A | 03 August 1993 |
| | | US | 5326133 | A | 05 July 1994 |
| | | US | 5389751 | A | 14 February 1995 |
| | | US | 5441301 | A | 15 August 1995 |
| | | US | 5505485 | A | 09 April 1996 |
| | | US | 5629681 | A | 13 May 1997 |
| | | US | 5653462 | A | 05 August 1997 |
| | | US | 5653464 | A | 05 August 1997 |
| | | US | 5684701 | A | 04 November 1997 |
| | | US | 5694320 | A | 02 December 1997 |
| | | US | 5746446 | A | 05 May 1998 |
| | | US | 5748473 | A | 05 May 1998 |
| | | US | 5772238 | A | 30 June 1998 |
| | | US | 5809437 | A | 15 September 1998 |
| | | US | 5822707 | A | 13 October 1998 |
| | | US | 5829782 | A | 03 November 1998 |
| | | US | 5835613 | A | 10 November 1998 |
| | | US | 5842716 | A | 01 December 1998 |
| | | US | 5845000 | A | 01 December 1998 |
| | | US | 5848802 | A | 15 December 1998 |
| | | US | 5863068 | A | 26 January 1999 |
| | | US | 5901978 | A | 11 May 1999 |
| | | US | 5943295 | A | 24 August 1999 |
| | | US | 6009970 | A | 04 January 2000 |
| | | US | 6039139 | A | 21 March 2000 |
| | | US | 6078854 | A | 20 June 2000 |
| | | US | 6081757 | A | 27 June 2000 |
| | | US | 6088640 | A | 11 July 2000 |
| | | US | 6116639 | A | 12 September 2000 |
| | | US | 6134492 | A | 17 October 2000 |
| | | US | 6141432 | A | 31 October 2000 |
| | | US | 6149194 | A | 21 November 2000 |
| | | US | 6168198 | B1 | 02 January 2001 |
| | | US | 6175787 | B1 | 16 January 2001 |
| | | US | 6179326 | B1 | 30 January 2001 |

Form PCT/ISA/210 (patent family annex) (July 2022)

## INTERNATIONAL SEARCH REPORT
### Information on patent family members

International application No.

**PCT/KR2025/015696**

| Patent document cited in search report | Publication date (day/month/year) | Patent family member(s) | | | Publication date (day/month/year) |
|---|---|---|---|---|---|
| | | US | 6186537 | B1 | 13 February 2001 |
| | | US | 6206129 | B1 | 27 March 2001 |
| | | US | 6209909 | B1 | 03 April 2001 |
| | | US | 6234519 | B1 | 22 May 2001 |
| | | US | 6234520 | B1 | 22 May 2001 |
| | | US | 6242701 | B1 | 05 June 2001 |
| | | US | 6250668 | B1 | 26 June 2001 |
| | | US | 6253134 | B1 | 26 June 2001 |
| | | US | 6254127 | B1 | 03 July 2001 |
| | | US | 6270116 | B1 | 07 August 2001 |
| | | US | 6279946 | B1 | 28 August 2001 |
| | | US | 6283503 | B1 | 04 September 2001 |
| | | US | 6324453 | B1 | 27 November 2001 |
| | | US | 6325414 | B2 | 04 December 2001 |
| | | US | 6326704 | B1 | 04 December 2001 |
| | | US | 6328126 | B2 | 11 December 2001 |
| | | US | 6330501 | B1 | 11 December 2001 |
| | | US | 6343810 | B1 | 05 February 2002 |
| | | US | 6370475 | B1 | 09 April 2002 |
| | | US | 6393133 | B1 | 21 May 2002 |
| | | US | 6397136 | B1 | 28 May 2002 |
| | | US | 6405132 | B1 | 11 June 2002 |
| | | US | 6412813 | B1 | 02 July 2002 |
| | | US | 6419265 | B1 | 16 July 2002 |
| | | US | 6422595 | B1 | 23 July 2002 |
| | | US | 6442465 | B2 | 27 August 2002 |
| | | US | 6442504 | B1 | 27 August 2002 |
| | | US | 6445988 | B1 | 03 September 2002 |
| | | US | 6452870 | B1 | 17 September 2002 |
| | | US | 6459973 | B1 | 01 October 2002 |
| | | US | 6474683 | B1 | 05 November 2002 |
| | | US | 6484080 | B2 | 19 November 2002 |
| | | US | 6507779 | B2 | 14 January 2003 |
| | | US | 6513830 | B2 | 04 February 2003 |
| | | US | 6513833 | B2 | 04 February 2003 |
| | | US | 6517107 | B2 | 11 February 2003 |
| | | US | 6526352 | B1 | 25 February 2003 |
| | | US | 6529809 | B1 | 04 March 2003 |
| | | US | 6532408 | B1 | 11 March 2003 |
| | | US | 6533316 | B2 | 18 March 2003 |
| | | US | 6553296 | B2 | 22 April 2003 |
| | | US | 6555766 | B2 | 29 April 2003 |
| | | US | 6557889 | B2 | 06 May 2003 |
| | | US | 6609053 | B1 | 19 August 2003 |
| | | US | 6615656 | B1 | 09 September 2003 |
| | | US | 6623033 | B2 | 23 September 2003 |
| | | US | 6648367 | B2 | 18 November 2003 |
| | | US | 6653577 | B2 | 25 November 2003 |
| | | US | 6662642 | B2 | 16 December 2003 |
| | | US | 6685218 | B1 | 03 February 2004 |

Form PCT/ISA/210 (patent family annex) (July 2022)

## INTERNATIONAL SEARCH REPORT
### Information on patent family members

International application No.

**PCT/KR2025/015696**

| Patent document cited in search report | Publication date (day/month/year) | Patent family member(s) | | | Publication date (day/month/year) |
|---|---|---|---|---|---|
| | | US | 6689962 | B2 | 10 February 2004 |
| | | US | 6712387 | B1 | 30 March 2004 |
| | | US | 6715790 | B2 | 06 April 2004 |
| | | US | 6720920 | B2 | 13 April 2004 |
| | | US | 6731569 | B2 | 04 May 2004 |
| | | US | 6733036 | B2 | 11 May 2004 |
| | | US | 6735506 | B2 | 11 May 2004 |
| | | US | 6736231 | B2 | 18 May 2004 |
| | | US | 6738697 | B2 | 18 May 2004 |
| | | US | 6746078 | B2 | 08 June 2004 |
| | | US | 6748797 | B2 | 15 June 2004 |
| | | US | 6749218 | B2 | 15 June 2004 |
| | | US | 6755273 | B2 | 29 June 2004 |
| | | US | 6757602 | B2 | 29 June 2004 |
| | | US | 6768944 | B2 | 27 July 2004 |
| | | US | 6772057 | B2 | 03 August 2004 |
| | | US | 6778672 | B2 | 17 August 2004 |
| | | US | 6782316 | B2 | 24 August 2004 |
| | | US | 6784379 | B2 | 31 August 2004 |
| | | US | 6792342 | B2 | 14 September 2004 |
| | | US | 6793242 | B2 | 21 September 2004 |
| | | US | 6805404 | B1 | 19 October 2004 |
| | | US | 6820897 | B2 | 23 November 2004 |
| | | US | 6823244 | B2 | 23 November 2004 |
| | | US | 6833516 | B2 | 21 December 2004 |
| | | US | 6850824 | B2 | 01 February 2005 |
| | | US | 6856873 | B2 | 15 February 2005 |
| | | US | 6856876 | B2 | 15 February 2005 |
| | | US | 6869100 | B2 | 22 March 2005 |
| | | US | 6875976 | B2 | 05 April 2005 |
| | | US | 6885968 | B2 | 26 April 2005 |
| | | US | 6892572 | B2 | 17 May 2005 |
| | | US | 6899134 | B2 | 31 May 2005 |
| | | US | 6905135 | B2 | 14 June 2005 |
| | | US | 6910711 | B1 | 28 June 2005 |
| | | US | 6918459 | B2 | 19 July 2005 |
| | | US | 6919803 | B2 | 19 July 2005 |
| | | US | 6942248 | B2 | 13 September 2005 |
| | | US | 6950022 | B2 | 27 September 2005 |
| | | US | 6958451 | B2 | 25 October 2005 |
| | | US | 6984818 | B1 | 10 January 2006 |
| | | US | 6988026 | B2 | 17 January 2006 |
| | | US | 7025379 | B2 | 11 April 2006 |
| | | US | 7040653 | B1 | 09 May 2006 |
| | | US | 7049945 | B2 | 23 May 2006 |
| | | US | 7050897 | B2 | 23 May 2006 |
| | | US | 7052038 | B2 | 30 May 2006 |
| | | US | 7070202 | B2 | 04 July 2006 |
| | | US | 7076102 | B2 | 11 July 2006 |
| | | US | 7079450 | B2 | 18 July 2006 |

Form PCT/ISA/210 (patent family annex) (July 2022)

## INTERNATIONAL SEARCH REPORT
### Information on patent family members

International application No.

**PCT/KR2025/015696**

| Patent document cited in search report | Publication date (day/month/year) | Patent family member(s) | | Publication date (day/month/year) |
|---|---|---|---|---|
| | | US | 7082359 B2 | 25 July 2006 |
| | | US | 7085637 B2 | 01 August 2006 |
| | | US | 7089099 B2 | 08 August 2006 |
| | | US | 7097201 B2 | 29 August 2006 |
| | | US | 7103460 B1 | 05 September 2006 |
| | | US | 7110880 B2 | 19 September 2006 |
| | | US | 7126583 B1 | 24 October 2006 |
| | | US | 7134687 B2 | 14 November 2006 |
| | | US | 7147246 B2 | 12 December 2006 |
| | | US | 7164117 B2 | 16 January 2007 |
| | | US | 7202776 B2 | 10 April 2007 |
| | | US | 7209221 B2 | 24 April 2007 |
| | | US | 7243945 B2 | 17 July 2007 |
| | | US | 7253725 B2 | 07 August 2007 |
| | | US | 7284769 B2 | 23 October 2007 |
| | | US | 7295925 B2 | 13 November 2007 |
| | | US | 7313467 B2 | 25 December 2007 |
| | | US | 7324039 B2 | 29 January 2008 |
| | | US | 7330784 B2 | 12 February 2008 |
| | | US | 7334657 B2 | 26 February 2008 |
| | | US | 7338069 B2 | 04 March 2008 |
| | | US | 7359527 B2 | 15 April 2008 |
| | | US | 7359782 B2 | 15 April 2008 |
| | | US | 7379800 B2 | 27 May 2008 |
| | | US | 7386372 B2 | 10 June 2008 |
| | | US | 7387183 B2 | 17 June 2008 |
| | | US | 7401807 B2 | 22 July 2008 |
| | | US | 7407029 B2 | 05 August 2008 |
| | | US | 7408453 B2 | 05 August 2008 |
| | | US | 7413048 B2 | 19 August 2008 |
| | | US | 7415126 B2 | 19 August 2008 |
| | | US | 7418346 B2 | 26 August 2008 |
| | | US | 7421321 B2 | 02 September 2008 |
| | | US | 7426437 B2 | 16 September 2008 |
| | | US | 7433161 B2 | 07 October 2008 |
| | | US | 7444210 B2 | 28 October 2008 |
| | | US | 7467034 B2 | 16 December 2008 |
| | | US | 7467809 B2 | 23 December 2008 |
| | | US | 7477758 B2 | 13 January 2009 |
| | | US | 7481453 B2 | 27 January 2009 |
| | | US | 7511833 B2 | 31 March 2009 |
| | | US | 7523803 B2 | 28 April 2009 |
| | | US | 7527288 B2 | 05 May 2009 |
| | | US | 7549327 B2 | 23 June 2009 |
| | | US | 7555370 B2 | 30 June 2009 |
| | | US | 7570785 B2 | 04 August 2009 |
| | | US | 7575248 B2 | 18 August 2009 |
| | | US | 7580782 B2 | 25 August 2009 |
| | | US | 7588115 B2 | 15 September 2009 |
| | | US | 7596242 B2 | 29 September 2009 |

Form PCT/ISA/210 (patent family annex) (July 2022)

53

## INTERNATIONAL SEARCH REPORT
### Information on patent family members

International application No.

**PCT/KR2025/015696**

| Patent document cited in search report | Publication date (day/month/year) | Patent family member(s) | | | Publication date (day/month/year) |
|---|---|---|---|---|---|
| | | US | 7602313 | B2 | 13 October 2009 |
| | | US | 7603894 | B2 | 20 October 2009 |
| | | US | 7604080 | B2 | 20 October 2009 |
| | | US | 7610146 | B2 | 27 October 2009 |
| | | US | 7620521 | B2 | 17 November 2009 |
| | | US | 7629899 | B2 | 08 December 2009 |
| | | US | 7630802 | B2 | 08 December 2009 |
| | | US | 7630806 | B2 | 08 December 2009 |
| | | US | 7635043 | B2 | 22 December 2009 |
| | | US | 7647180 | B2 | 12 January 2010 |
| | | US | 7648164 | B2 | 19 January 2010 |
| | | US | 7650210 | B2 | 19 January 2010 |
| | | US | 7650212 | B2 | 19 January 2010 |
| | | US | 7655895 | B2 | 02 February 2010 |
| | | US | 7657354 | B2 | 02 February 2010 |
| | | US | 7660437 | B2 | 09 February 2010 |
| | | US | 7663502 | B2 | 16 February 2010 |
| | | US | 7672756 | B2 | 02 March 2010 |
| | | US | 7676062 | B2 | 09 March 2010 |
| | | US | 7693626 | B2 | 06 April 2010 |
| | | US | 7695015 | B2 | 13 April 2010 |
| | | US | 7712777 | B2 | 11 May 2010 |
| | | US | 7726684 | B2 | 01 June 2010 |
| | | US | 7734061 | B2 | 08 June 2010 |
| | | US | 7738678 | B2 | 15 June 2010 |
| | | US | 7740273 | B2 | 22 June 2010 |
| | | US | 7744122 | B2 | 29 June 2010 |
| | | US | 7760080 | B2 | 20 July 2010 |
| | | US | 7762580 | B2 | 27 July 2010 |
| | | US | 7762582 | B2 | 27 July 2010 |
| | | US | 7766383 | B2 | 03 August 2010 |
| | | US | 7768380 | B2 | 03 August 2010 |
| | | US | 7769513 | B2 | 03 August 2010 |
| | | US | 7770920 | B2 | 10 August 2010 |
| | | US | 7774115 | B2 | 10 August 2010 |
| | | US | 7779956 | B2 | 24 August 2010 |
| | | US | 7783403 | B2 | 24 August 2010 |
| | | US | 7786864 | B1 | 31 August 2010 |
| | | US | 7788008 | B2 | 31 August 2010 |
| | | US | 7791503 | B2 | 07 September 2010 |
| | | US | 7796081 | B2 | 14 September 2010 |
| | | US | 7815219 | B2 | 19 October 2010 |
| | | US | 7819003 | B2 | 26 October 2010 |
| | | US | 7831358 | B2 | 09 November 2010 |
| | | US | 7832762 | B2 | 16 November 2010 |
| | | US | 7840342 | B1 | 23 November 2010 |
| | | US | 7840355 | B2 | 23 November 2010 |
| | | US | 7852462 | B2 | 14 December 2010 |
| | | US | 7860626 | B2 | 28 December 2010 |
| | | US | 7880594 | B2 | 01 February 2011 |

Form PCT/ISA/210 (patent family annex) (July 2022)

**INTERNATIONAL SEARCH REPORT**
Information on patent family members

International application No.

**PCT/KR2025/015696**

| Patent document cited in search report | Publication date (day/month/year) | Patent family member(s) | | Publication date (day/month/year) |
|---|---|---|---|---|
| | | US | 7887089 B2 | 15 February 2011 |
| | | US | 7889096 B2 | 15 February 2011 |
| | | US | 7899616 B2 | 01 March 2011 |
| | | US | 7899621 B2 | 01 March 2011 |
| | | US | 7900736 B2 | 08 March 2011 |
| | | US | 7911324 B2 | 22 March 2011 |
| | | US | 7912645 B2 | 22 March 2011 |
| | | US | 7918100 B2 | 05 April 2011 |
| | | US | 7920102 B2 | 05 April 2011 |
| | | US | 7961094 B2 | 14 June 2011 |
| | | US | 7962285 B2 | 14 June 2011 |
| | | US | 7976060 B2 | 12 July 2011 |
| | | US | 7979172 B2 | 12 July 2011 |
| | | US | 7979173 B2 | 12 July 2011 |
| | | US | 7983802 B2 | 19 July 2011 |
| | | US | 7983817 B2 | 19 July 2011 |
| | | US | 7983836 B2 | 19 July 2011 |
| | | US | 7988190 B2 | 02 August 2011 |
| | | US | 7990283 B2 | 02 August 2011 |
| | | US | 8000897 B2 | 16 August 2011 |
| | | US | 8014789 B2 | 06 September 2011 |
| | | US | 8019501 B2 | 13 September 2011 |
| | | US | 8024084 B2 | 20 September 2011 |
| | | US | 8032264 B2 | 04 October 2011 |
| | | US | 8035508 B2 | 11 October 2011 |
| | | US | 8036788 B2 | 11 October 2011 |
| | | US | 8041483 B2 | 18 October 2011 |
| | | US | 8047432 B2 | 01 November 2011 |
| | | US | 8054203 B2 | 08 November 2011 |
| | | US | 8060282 B2 | 15 November 2011 |
| | | US | 8060308 B2 | 15 November 2011 |
| | | US | 8068942 B2 | 29 November 2011 |
| | | US | 8068979 B2 | 29 November 2011 |
| | | US | 8115620 B2 | 14 February 2012 |
| | | US | 8152198 B2 | 10 April 2012 |
| | | US | 8157047 B2 | 17 April 2012 |
| | | US | 8159338 B2 | 17 April 2012 |
| | | US | 8169311 B1 | 01 May 2012 |
| | | US | 8189825 B2 | 29 May 2012 |
| | | US | 8209120 B2 | 26 June 2012 |
| | | US | 8229624 B2 | 24 July 2012 |
| | | US | 8255144 B2 | 28 August 2012 |
| | | US | 8260537 B2 | 04 September 2012 |
| | | US | 8310363 B2 | 13 November 2012 |
| | | US | 8331239 B2 | 11 December 2012 |
| | | US | 8346438 B2 | 01 January 2013 |
| | | US | 8354927 B2 | 15 January 2013 |
| | | US | 8384538 B2 | 26 February 2013 |
| | | US | 8410945 B2 | 02 April 2013 |
| | | US | 8447474 B2 | 21 May 2013 |

Form PCT/ISA/210 (patent family annex) (July 2022)

## INTERNATIONAL SEARCH REPORT
### Information on patent family members

International application No.

**PCT/KR2025/015696**

| Patent document cited in search report | | | Publication date (day/month/year) | Patent family member(s) | | | Publication date (day/month/year) |
|---|---|---|---|---|---|---|---|
| | | | | US | 8482399 | B2 | 09 July 2013 |
| | | | | US | 8538636 | B2 | 17 September 2013 |
| | | | | US | 8581688 | B2 | 12 November 2013 |
| | | | | US | 8604932 | B2 | 10 December 2013 |
| | | | | US | 8686922 | B2 | 01 April 2014 |
| | | | | US | 8818647 | B2 | 26 August 2014 |
| | | | | US | 8948442 | B2 | 03 February 2015 |
| | | | | US | 9014953 | B2 | 21 April 2015 |
| | | | | US | 9043093 | B2 | 26 May 2015 |
| | | | | US | 9102220 | B2 | 11 August 2015 |
| | | | | US | 9151692 | B2 | 06 October 2015 |
| | | | | US | 9177476 | B2 | 03 November 2015 |
| | | | | US | 9290146 | B2 | 22 March 2016 |
| | | | | US | 9443358 | B2 | 13 September 2016 |
| KR | 10-2020-0033364 | A | 30 March 2020 | KR | 10-2132603 | B1 | 13 July 2020 |
| KR | 10-2021-0067822 | A | 08 June 2021 | KR | 10-2309785 | B1 | 08 October 2021 |
| US | 2017-0019525 | A1 | 19 January 2017 | AU | 2016-294604 | A1 | 08 March 2018 |
| | | | | BR | 112018000692 | A2 | 18 September 2018 |
| | | | | CA | 2992459 | A1 | 19 January 2017 |
| | | | | CN | 107850667 | A | 27 March 2018 |
| | | | | EP | 3323000 | A1 | 23 May 2018 |
| | | | | EP | 3323000 | A4 | 13 November 2019 |
| | | | | JP | 2018-522239 | A | 09 August 2018 |
| | | | | KR | 10-2018-0021900 | A | 05 March 2018 |
| | | | | TW | 201708840 | A | 01 March 2017 |
| | | | | TW | I693424 | B | 11 May 2020 |
| | | | | US | 10205819 | B2 | 12 February 2019 |
| | | | | US | 10547736 | B2 | 28 January 2020 |
| | | | | US | 2019-0199850 | A1 | 27 June 2019 |
| | | | | WO | 2017-011672 | A1 | 19 January 2017 |
| KR | 10-2021-0077978 | A | 28 June 2021 | CN | 112986966 | A | 18 June 2021 |
| | | | | CN | 112986966 | B | 09 February 2024 |
| | | | | KR | 10-2333240 | B1 | 01 December 2021 |
| | | | | US | 11841423 | B2 | 12 December 2023 |
| | | | | US | 2021-0190957 | A1 | 24 June 2021 |

Form PCT/ISA/210 (patent family annex) (July 2022)